(19) **Europäisches Patentamt / European Patent Office / Office européen des brevets**

(11) **EP 2 312 853 A1**

(12) **EUROPEAN PATENT APPLICATION**
published in accordance with Art. 153(4) EPC

(43) Date of publication:
**20.04.2011 Bulletin 2011/16**

(21) Application number: **09773489.1**

(22) Date of filing: **30.06.2009**

(51) Int Cl.:
**H04N 7/26** (2006.01)

(86) International application number:
**PCT/JP2009/062003**

(87) International publication number:
**WO 2010/001911 (07.01.2010 Gazette 2010/01)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **03.07.2008 JP 2008174773**

(71) Applicant: **Sharp Kabushiki Kaisha**
**Osaka-shi, Osaka 545-8522 (JP)**

(72) Inventor: **IKAI, Tomohiro**
**Osaka-shi**
**Osaka 545-8522 (JP)**

(74) Representative: **Müller - Hoffmann & Partner**
**Patentanwälte**
**Innere Wiener Strasse 17**
**81667 München (DE)**

(54) **FILTER DEVICE**

(57)    A filter device (1) of the present invention includes: an absolute difference calculation section for calculating an absolute difference between (a) a pixel value of a boundary pixel in a target block to be processed, which target block has a block size equal to or more than a first threshold, and (b) a pixel value of an adjacent pixel adjacent to the boundary pixel; and a pixel-value calculation section (12) for calculating a filtered pixel value of a target pixel to be processed, which is positioned in vicinity to a boundary between the target block and the adjacent block, and in a case where the absolute difference thus calculated is less than a second threshold, the pixel-value calculation section (12) calculates the filtered pixel value of the target pixel based on an unfiltered pixel value of the target pixel and the pixel value of the adjacent pixel. It is thereby possible to provide a filter device that can restrain an increase in the amount of calculation due to block size by which an image is divided, and prevent degradation of image quality of a decoded image.

FIG. 1

EP 2 312 853 A1

**Description**

Technical Field

The present invention relates to a filter device for removing block noise occurring at a time of decoding encoded image information obtained by dividing image information into blocks having different sizes and encoding the blocks.

Background Art

Image encoding techniques are widely used in various types of accessible video image apparatuses, such as a television receiver, a mobile phone capable of carrying out image processing, and the like.

In the field related to the image encoding techniques, generally, encoding is carried out as follows: (i) image data (image information) is divided into a plurality of blocks; (ii) each of the plurality of blocks is subjected to orthogonal transformation to obtain transformation coefficients; (iii) the transformation coefficients thus obtained are quantized; and (iv) the transformation coefficients thus quantized are then subjected to variable length coding. Such an encoding method degrades an image due to information loss resulting from the quantization. Particularly, large degradation in the image is easily caused by large distortion (what is called block noise) occurring at a boundary lying between blocks, on each of which the orthogonal transformation is carried out. When the block noise occurs at the boundary between blocks during the image encoding process, block noise also occurs when an encoded image is decoded. This easily gives a user an unnatural impression on the image when the user watches it. In view of this, general image decoding devices (or image encoding devices) employ a filter device for filtering block noise occurring at a boundary between blocks, so as to remove the block noise.

Non-Patent Literature 1 discloses a basic filtering process technique. The filtering process technique disclosed in Non-Patent Literature 1 is described below with reference to Fig. 16. Fig. 16 schematically illustrates pixels in vicinity to a block boundary (also referred to just as "boundary") and pixel values of the pixels.

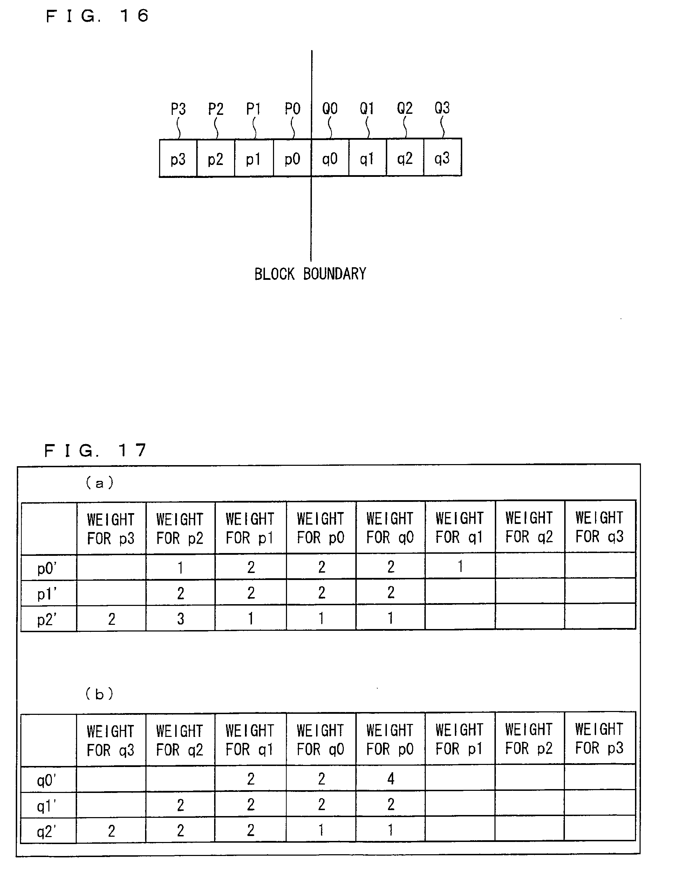

In Fig. 16, the boundary lies between a pixel P0 having a pixel value of p0 and a pixel Q0 having a pixel value of q0. Respective pixels next to the pixel P0 on the left of the boundary are referred to as a pixel P1, a pixel P2, and a pixel P3 in the order closer to the boundary, while respective pixels next to the pixel Q0 on the right of the boundary are referred to as a pixel Q1, a pixel Q2, and a pixel Q3 in the order closer to the boundary. Further, respective pixel values of the pixels P1, P2, and P3 are represented by p1, p2, and p3, while respective pixel values of the pixels Q1, Q2, and Q3 are represented by q1, q2, and q3. In other words, in Fig. 16, two blocks are adjacent to each other across the block boundary, and a pixel value of a pixel in one of the blocks is represented by "pk" (k is a value defined by a distance from the boundary) while a pixel value of a pixel in the other block is represented by "qk" (k is a value defined by a distance from the boundary). Note that, in Fig. 16, whether the boundary is along a horizontal direction or a vertical direction is not particularly distinguished.

Further, Non-Patent Literature 1 discloses several types of filtering processes. In the present specification, a filtering process using a mode called "BS = 4" is taken as an example to explain the basic filtering process technique.

In the mode BS = 4, values "d" and "ap" indicative of a state of the boundary are calculated according to Formulae (13) and (14) as follows:

$$d = ABS(p0 - q0) \ ... \ (13)$$

$$ap = ABS(p2 - q0) \ ... \ (14)$$

A filter device carries out a filtering process in a case where the values "d" and "ap" satisfy d<α and ap<β (α and β are given thresholds). When the above condition is not satisfied, the filter device carries out no filtering process on a target pixel to be processed (also referred to as "target pixel to be filtered".

In a case where the above condition is satisfied, i.e., the filtering process is to be carried out, the filter device carries out the filtering process on the target pixel to be filtered, based on filter coefficients (weighting) shown in (a) and (b) of Fig. 17. That is, filtered pixel values of respective target pixels are calculated according to the following formulae:

$$p0' = (p2 + 2 \times p1 + 2 \times p0 + 2 \times q0 + q1)/8$$

$$p1' = (p2 + p1 + p0 + q0)/4$$

$$p2' = (2 \times p3 + 3 \times p2 + p1 + p0 + q0)/8$$

$$q0' = (q2 + 2 \times q1 + 2 \times q0 + 2 \times p0 + p1)/8$$

$$q1' = (q2 + q1 + q0 + p0)/4$$

$$q2' = (2 \times q3 + 3 \times q2 + q1 + q0 + p0)/8.$$

The pixel values p0', p1', p2', q0', q1', and q2' indicate filtered pixel values of the respective target pixels. Further, (a) and (b) of Fig. 17 show filter coefficients for the respective pixel values, used in the filtering process.

As such, Non-Patent Literature 1 discloses a filtering process method in which a filtering process is carried out by referring to (i) pixel values of pixels in vicinity to a target pixel to be filtered and (ii) pixel values of pixels in vicinity to a target boundary to be filtered. However, the filtering process disclosed in Non-Patent Literature 1 is a process that needs a very large amount of calculation. In view of this, in an actual filtering process, a process in which the process technique of Non-Patent Literature 1 is simplified is used (see, for example, Patent Literature 1).

In the filtering process technique disclosed in Patent Literature 1, a filter device also calculates values indicative of a state of a block boundary which has not been filtered yet, similarly to the filtering process technique disclosed in Non-Patent Literature 1. That is, the filter device calculates ABS(p1 - q0), ABS(p0 - q0), and ABS(q0 - q1). In a case where these values indicative of the state of the block boundary are less than a given threshold, the filter device carries out a filtering process on a target pixel to be filtered. In a case where these values are equal to or more than the given threshold, no filtering process is carried out on the target pixel.

In a case where the calculated values indicative of the state of the block boundary is less than the given threshold, i.e., the filtering process is to be carried out, the filter device disclosed in Patent Literature 1 carries out linear interpolation by use of a pixel value p1 and a pixel value q1 of a pixel P1 and a pixel Q1, which are located in vicinity to block boundary pixels, so as to calculate a filtered pixel value p0' and a filtered pixel value q0' of a pixel P0 and a pixel Q0 each adjacent to the block boundary. More specifically, the filtered pixel value p0' of the pixel P0 and the filtered pixel value q0' of the pixel Q0 are calculated, respectively, according to the following Formulae (15) and (16):

$$p0' = p1 + (p1 - q1)/3 \ldots (15)$$

$$q0' = q0 + (q1 - p1)/3 \ldots (16)$$

Fig. 18 schematically illustrates the filtering process in Patent Literature 1.

Patent Literature 1 also discloses, other than the aforementioned filtering process technique, a method for carrying out curve interpolation by referring to more pixels.

In these days, a target image to be encoded has higher definition, and expansion of a size of a block to be subjected to orthogonal transformation is now being studied (for example, Non-Patent Literature 2). As disclosed in Non-Patent Literature 2, in a case where a block to be subjected to orthogonal transformation has an enlarged size, it is easy to express low-frequency components of an image, i.e., a gradual change in an image.

Citation List

Patent Literature 1

Japanese Patent Application Publication, Tokukai, No. 2005-39766 A (Publication Date: February 10, 2005)

Non-Patent Literature 1

ITU-T, "ISO/IEC14496-10", published on May, 2003, pp. 144 - 153

Non-Patent Literature 2

"Coding of Super-High Definition Video Via Expansion of AVC/H.264 Transform Block Size", Shinich SAKAIDA et al., The Institute of Electronics, Information and Communication Engineers, General Conference D-11-41 (2006)

Summary of Invention

Technical Problem

In a case where the block to be subjected to orthogonal transformation or the like transformation has an enlarged size as such, it is necessary to carry out a filtering process that is suitable for the size of the block to be subjected to orthogonal transformation or the like transformation. That is, it is necessary to carry out a filtering process with respect to blocks having a larger size than a conventional block size.
However, in the filtering process technique disclosed in Non-Patent Literature 1, it is necessary that pixel values of pixels in vicinity to a target pixel to be filtered and pixel values of pixels in vicinity to a boundary to be filtered should be referred to. Therefore, in a case where a block to be subjected to orthogonal transformation is large in size, the amount of calculation, which is enormous even for a conventional block size, is further increased. That is, the filtering process technique disclosed in Non-Patent Literature 1 cannot be practical means as a filtering process carried out on such blocks having a larger size than a conventional block size.
Further, the filtering process method disclosed in Patent Literature 1 is such a method that interpolation is carried out without taking account of an original pixel value of a target pixel to be filtered. Therefore, it is difficult to carry out interpolation appropriately, in a case where a filtering process should be carried out on a larger area. This still raises such a problem that a decoded image that has been subjected to the filtering process is poor in image quality.
The present invention is accomplished in view of the above problems. An object of the present invention is to provide a filter device (i) which restrains that an amount of calculation is increased due to block size and (ii) which prevents that image quality of a decoded image is degraded.

Solution to Problem

A filter device of the present invention is a filter device for correcting a pixel value of a target pixel to be processed, when encoded image information is decoded, the target pixel being included in a given block and positioned in vicinity to a boundary between the given block and an adjacent block adjacent to the given block, the encoded image information being obtained by dividing image information into a plurality of blocks having different sizes and encoding the plurality of blocks thus divided. In order to achieve the above object, the filter device of the present invention includes first determining means for determining whether or not the given block has a size equal to or more than a first threshold; difference calculating means for, in a case where the given block has a size equal to or more than the first threshold, calculating an absolute difference between (a) a pixel value of a boundary pixel, which is included in the given block and placed in at least either a row or column where the target pixel is included and which is located next to the adjacent block, and (b) a pixel value of an adjacent pixel which is included in the adjacent block and which is adjacent to the boundary pixel; and pixel-value calculating means for, in a case where the absolute difference thus calculated is less than a second threshold, calculating a corrected pixel value of the target pixel based on (a) the pixel value of the target pixel and (b) the pixel value of the adjacent pixel.
A filter device of the present invention, includes pixel-value calculating means for, in a case where a given block has a size equal to or more than a first threshold and an absolution difference between (a) a pixel value of a boundary pixel in the given block and (b) a pixel value of an adjacent pixel which is included in an adjacent block and which is adjacent to the boundary pixel is less than a second threshold, calculating a corrected pixel value of a target pixel to be processed, based on an uncorrected pixel value of the target pixel and the pixel value of the adjacent pixel.
In a filter device of the present invention, when a filter process is carried out on a block having a size equal to or more than a first threshold, a corrected pixel value of a target pixel to be filtered is calculated by referring to pixel values of minimum required pixels. That is, it is possible to carry out a filtering process on the target pixel by a minimal amount of calculation.

According to the filter device of the present invention, it is possible to restrain an increase in the amount of calculation due to size of a target block to be subjected to removal of block noise and to prevent degradation of image quality of a decoded image.

Further, in the filter device of the present invention, it is preferable that in a case where the target pixel is placed in vicinity to both a first boundary between the given block and an adjacent block adjacent to the given block in a row direction and a second boundary between the given block and another adjacent block adjacent to the given block in a column direction, the pixel-value calculating means uses, as the pixel value of the adjacent pixel, (a) a pixel value of an adjacent pixel adjacent to a boundary pixel of the first boundary, and (b) a pixel value of an adjacent pixel adjacent to a boundary pixel of the second boundary.

Assume a case where the target pixel is placed in vicinity to both a boundary between the given block and a first block adjacent thereto in a row direction and a boundary between the given block and a second block adjacent thereto in a column direction, that is, a case where the target block is placed in a region like a corner of the given block, which region is close to both a horizontal boundary portion of a block horizontally adjacent to the given block and a vertical boundary portion of another block vertically adjacent to the given block. With the above arrangement, even in such a case, it is possible to carry out a filtering process in a horizontal direction and a vertical direction at once.

Accordingly, it is possible to prevent degradation of image quality caused by carrying out a filtering process on the target pixel separately in the horizontal direction and in the vertical direction in twice. This yields an effect that degradation of image quality of a decoded image can be further prevented.

In the filter device of the present invention, it is preferable that where a predetermined absolute value indicates an absolute difference equal to or more than a third threshold, the target pixel is set in either of the following manners: (a) among pixels included in each row in the given block, pixels from the boundary pixel located next to the adjacent block up to a given pixel having a pixel value that takes, in the first place, the predetermined absolute difference with a pixel value of a pixel followed by the given pixel are set as the target pixel, or (b) among pixels included in each column in the given block, pixels from the boundary pixel located next to the adjacent block up to a given pixel having a pixel value that takes, in the first place, the predetermined absolute difference with a pixel followed by the given pixel are set as the target pixel.

With the above arrangement, it is possible to determine a range of pixels to be set as the target pixel, which range starts from the boundary pixel located next to the adjacent block, as appropriate by calculating absolute differences between pixel values of adjoining pixels in a row direction.

This yields an effect that the filter device of the present invention can set, in each row or column, a range of pixels that can be a target pixel on which the filtering process is to be carried out, i.e., a range indicative of a vicinity of a boundary between a given block and its adjacent block, as appropriate.

The filter device of the present invention further includes second determining means for, in a case where the given block has a size less than the first threshold, determining whether or not any of adjacent blocks adjacent to the given block has a size equal to or more than the first threshold. In a case where any of the adjacent blocks has a size equal to or more than the first threshold, it is preferable that the pixel-value calculating means carry out filtering at a filter strength greater than in a case where all the adjacent blocks has a size less than the first threshold.

Block noise occurs easily and remarkably in a case where the adjacent block has a size equal to or more than the first threshold, as compared with a case where the adjacent block adjacent to the given block has a size less than the first threshold. Even in such a case, with the above arrangement, it is possible to remove the block noise.

This yields an effect that can further prevent degradation of image quality of a decoded image.

The filter device of the present invention is preferably arranged such that the pixel-value calculating means calculates the corrected pixel value of the target pixel according to the following formula (1):

$$W1 \times p + W2 \times q / (W1 + W2) \quad \ldots (1)$$

wherein p represents a pixel value of the target pixel; q represents a pixel value of the adjacent pixel; and W1 and W2 represent given weighting coefficients.

Further, the filter device of the present invention is preferably arranged such that the pixel-value calculating means calculates the corrected pixel value of the target pixel according to the following formula (2):

$$WP \times p + WH \times q + WV \times r/(WP + WH + WV) \quad \ldots (2)$$

wherein p represents a pixel value of the target pixel; q represents a pixel value of the adjacent pixel adjacent to the boundary pixel of the first boundary; r represents a pixel value of the adjacent pixel adjacent to the boundary pixel of the second boundary; WP, WH, and WV represent given weighting coefficients.

In order to achieve the above object, a filtering process method of the present invention is a method for correcting a pixel value of a target pixel to be processed, when encoded image information is decoded, the target pixel being included in a given block and positioned in vicinity to a boundary between the given block and an adjacent block adjacent to the given block, the encoded image information being obtained by dividing image information into a plurality of blocks having different sizes and encoding the plurality of blocks thus divided, and the method includes the steps of: (a) carrying out a first determination of determining whether or not the given block has a size equal to or more than a first threshold; (b) carrying out a difference calculation of calculating, in a case where the given block has a size equal to or more than the first threshold, an absolute difference between (i) a pixel value of a boundary pixel, which is included in the given block and placed in at least either a row or column where the target pixel is included and which is located next to the adjacent block, and (ii) a pixel value of an adjacent pixel which is included in the adjacent block and which is adjacent to the boundary pixel; and (c) calculating, in a case where the absolute difference thus calculated is less than a second threshold, a corrected pixel value of the target pixel based on the pixel value of the target pixel and the pixel value of the adjacent pixel.

With the above arrangement, the filter process method of the present invention yields the same effect as the filter device of the present invention.

Further, a decoding device including the filter device of the present invention and an encoding device including the filter device of the present invention are also included in the scope of the present invention.

Note that if pixels referred to in order to calculate a corrected pixel value of the target pixel are at least one pixel in the given block and at least one pixel in the adjacent block, the same effect as the filter device can be obtained.

That is, a filter device of the present invention may be a filter device for correcting a pixel value of a target pixel to be processed, when encoded image information is decoded, the target pixel being included in a given block and positioned in vicinity to a boundary between the given block and an adjacent block adjacent to the given block, the encoded image information being obtained by dividing image information into a plurality of blocks having different sizes and encoding the plurality of blocks thus divided, which filter device includes: first determining means for determining whether or not the given block has a size equal to or more than a first threshold; and pixel-value calculating means for, in a case where the given block has a size equal to or more than the first threshold, calculating a corrected pixel value of the target pixel based on (a) a pixel value of at least one pixel included in the given block and (b) a pixel value of at least one pixel included in the adjacent block. Further, in a case where the given block has a size equal to or more than the first threshold, the pixel-value calculating means calculates the corrected pixel value of the target pixel by use of pixels, the number of which is less than the number of pixels to be used in a case where the given block has a size less than the first threshold.

Advantageous Effects of Invention

As described above, a filter device of the present invention, includes pixel-value calculating means for calculating a corrected pixel value of a target pixel to be processed, which is positioned in vicinity to a boundary between a given block and a boundary block, and in a case where the given block, which is a target block from which block noise is to be removed, has a size equal to or more than a first threshold and an absolution difference between (a) a pixel value of a boundary pixel in the given block and (b) a pixel value of an adjacent pixel which is included in an adjacent block adjacent to the given block and which is adjacent to the boundary pixel is less than a second threshold, the pixel-value calculating means calculates the corrected pixel value of the target pixel based on an uncorrected pixel value of the target pixel and the pixel value of the adjacent pixel.

The above arrangement makes it advantageously possible for the filter device of the present invention to restrain an increase in calculation amount due to block size of a target block including a target pixel to be processed and to prevent degradation of image quality of a decoded image.

Brief Description of Drawings

Fig. 1

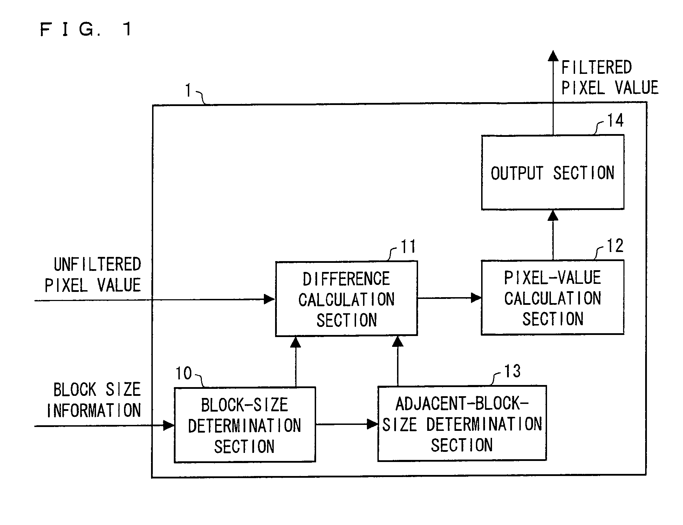

Fig. 1 is a block diagram illustrating an essential part of an arrangement of a filter device according to Embodiment 1.
Fig. 2

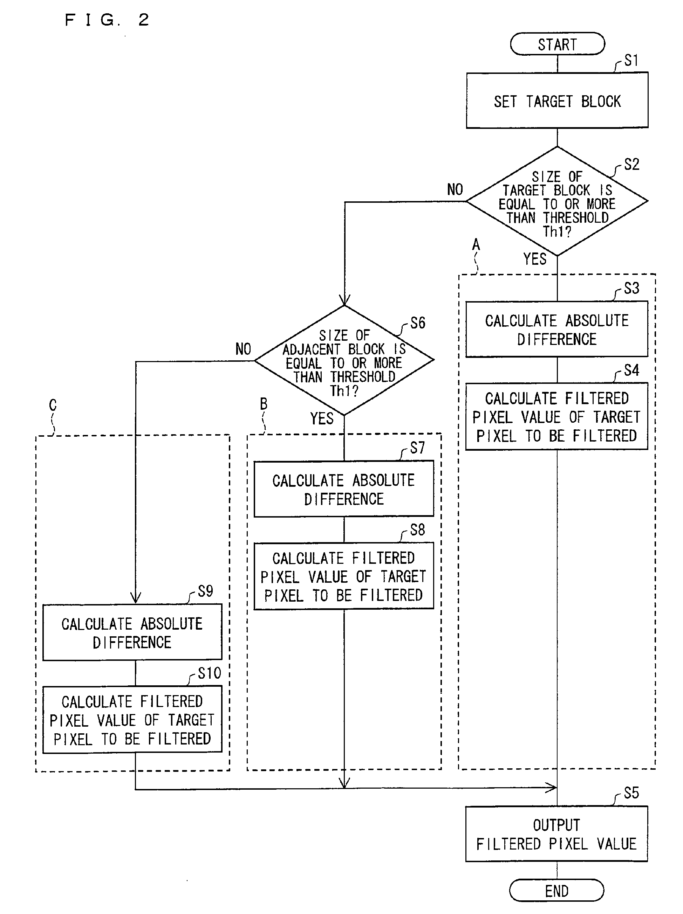

Fig. 2 is a flowchart illustrating how the filter device according to Embodiment 1 operates.
Fig. 3

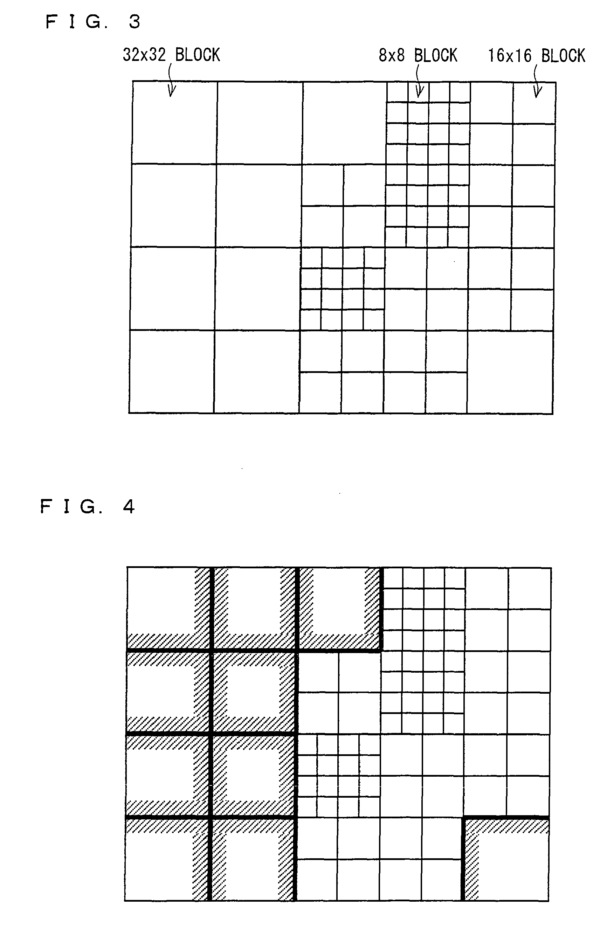

Fig. 3 schematically illustrates how image data is divided into blocks.
Fig. 4
Fig. 4 schematically illustrates a region including target pixels to be filtered, in each target block having a size equal to or more than a threshold Th 1.
Fig. 5

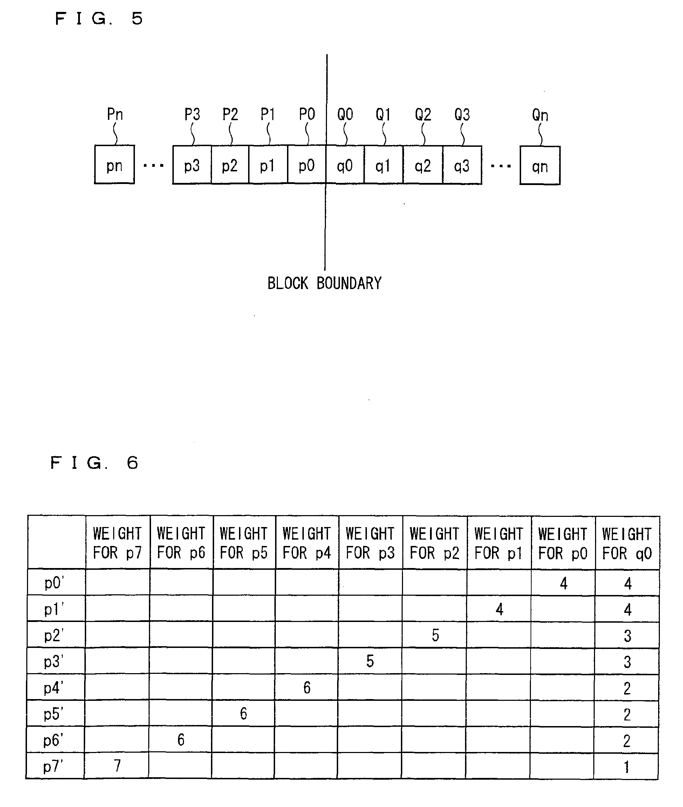

Fig. 5 schematically illustrates pixels in vicinity to a block boundary portion.
Fig. 6
Fig. 6 shows exemplary filter coefficients for pixels P0 to P7 and a pixel Q0.
Fig. 7

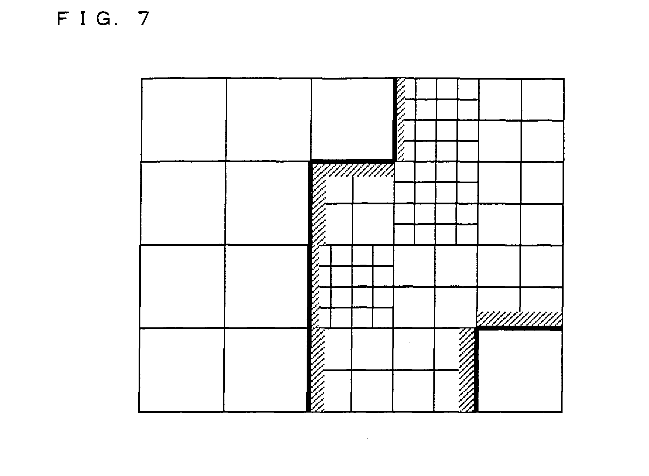

Fig. 7 schematically illustrates a region including target pixels to be filtered, in each target block, in a case where the target block has a size less than a threshold Th1 and a corresponding adjacent block has a size equal to or more than the threshold Th1.
Fig. 8

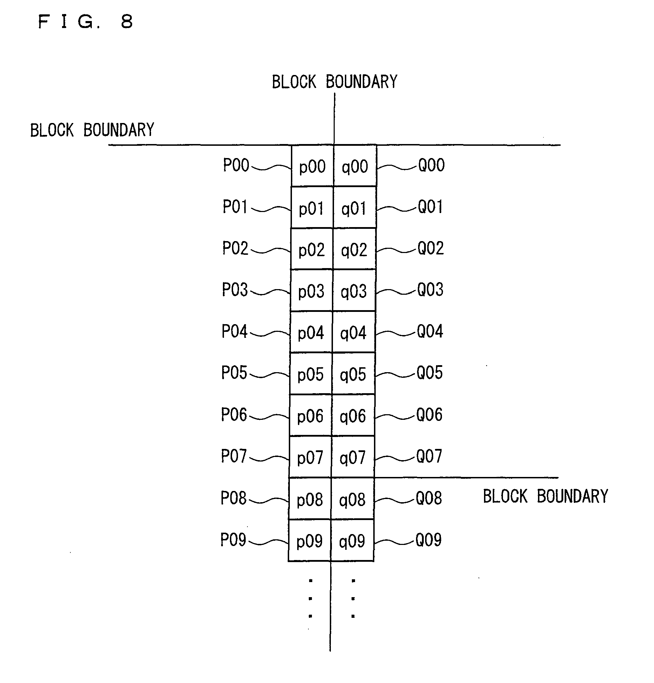

Fig. 8 schematically illustrates pixels in vicinity to a block boundary portion.
Fig. 9

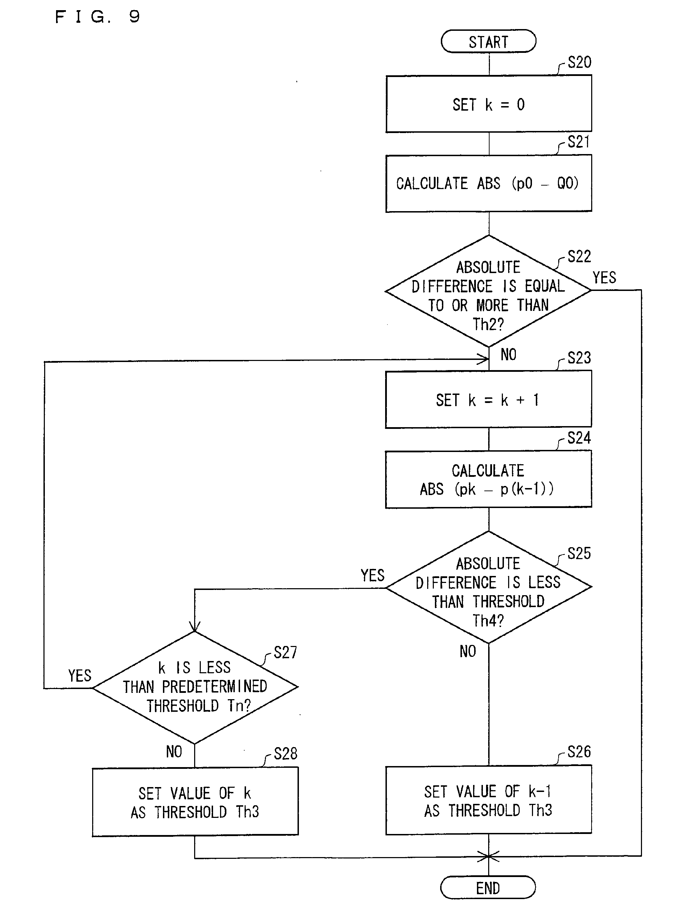

Fig. 9 is a flowchart illustrating how to set a threshold Th3.
Fig. 10

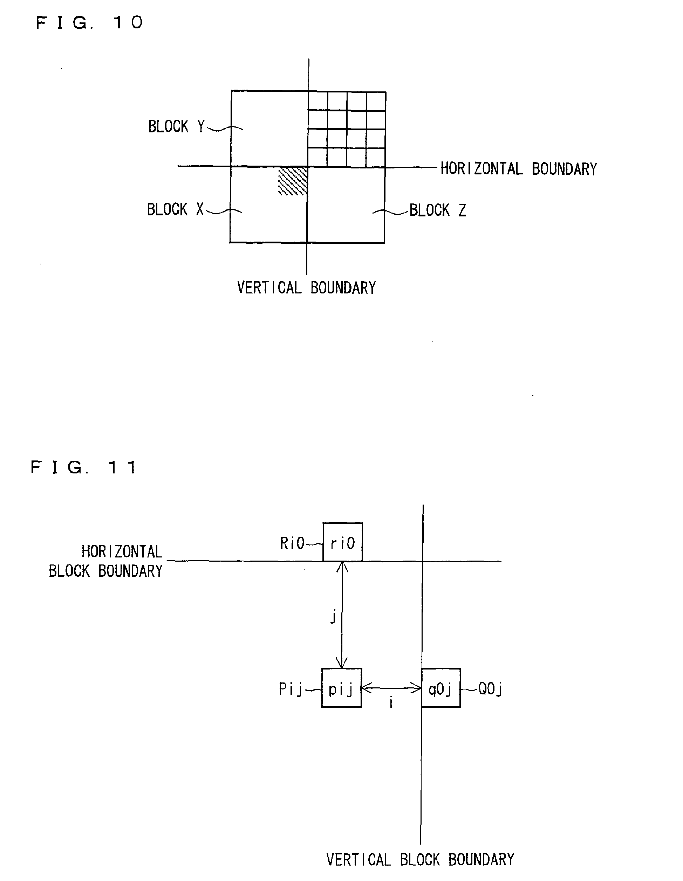

Fig. 10 illustrates a region, in a target block, which region is closer to both a horizontal boundary portion between the target block and an adjacent block thereof and a vertical boundary portion between the target block and another adjacent block thereof.
Fig. 11
Fig. 11 schematically illustrates pixels in a region shaded in Fig. 10.
Fig. 12

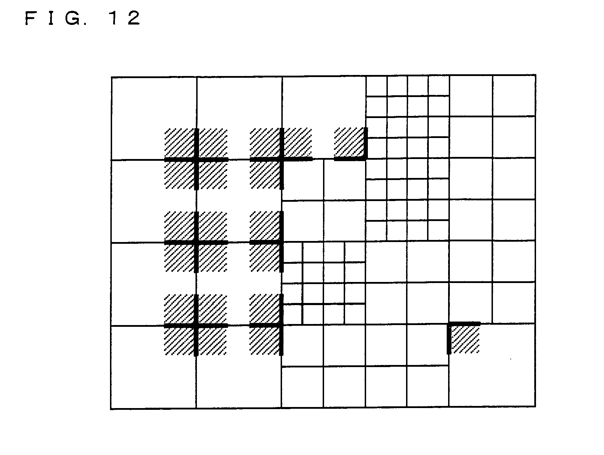

Fig. 12 schematically illustrates a region to be subjected to a planar filtering process.
Fig. 13

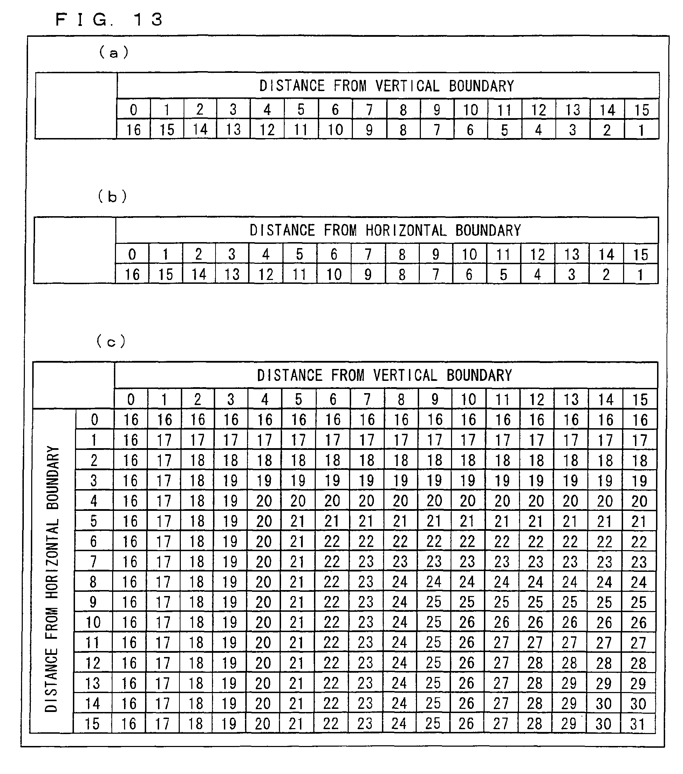

Fig. 13 shows exemplary filter coefficients used in a planar filtering process: (a) of Fig. 13 shows filter coefficients for WV; (b) of Fig. 13 shows filter coefficients for WH; and (c) of Fig. 13 shows filter coefficients for WP.
Fig. 14

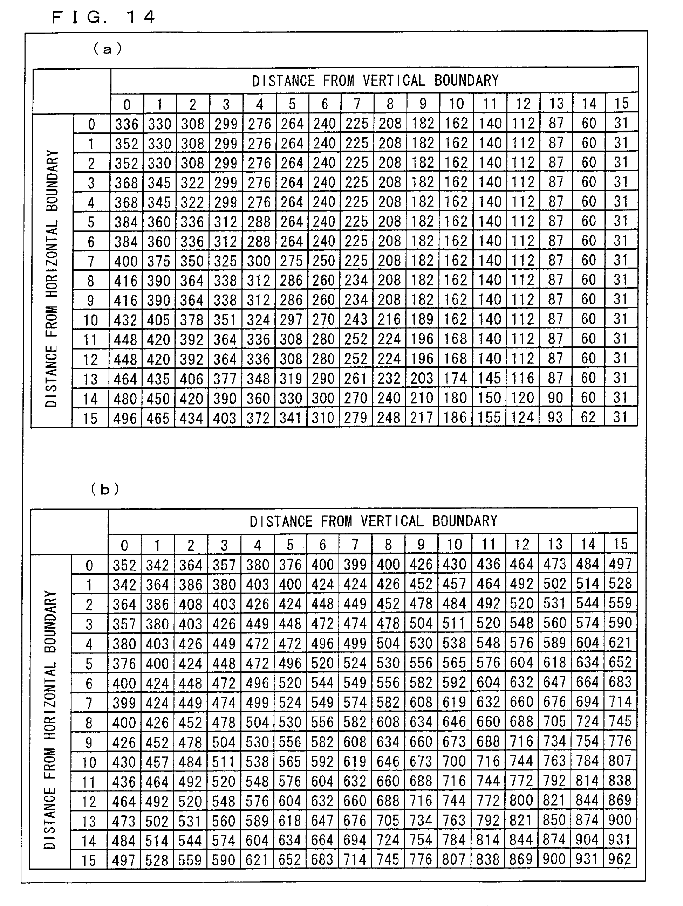

Fig. 14 show modified examples of the filter coefficients used in a planar filtering process: (a) of Fig. 13 shows filter coefficients for WV'; (b) of Fig. 13 shows filter coefficients for WP'.
Fig. 15

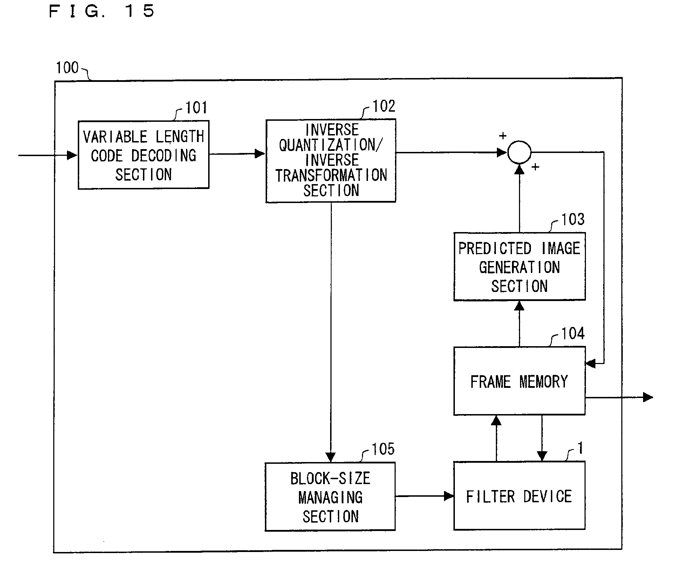

Fig. 15 is a block diagram illustrating an essential part of an arrangement of a decoded device according to Embodiment 2.
Fig. 16
Fig. 16 schematically illustrates pixels in vicinity to a block boundary and respective pixel values of the pixels.
Fig. 17
Fig. 17 shows exemplary filter coefficients: (a) of Fig. 17 shows filter coefficients used for calculating pixels values p0', p1', and p2', and; (b) of Fig. 17 shows filter coefficients used for calculating pixel values q0', q1', and q2'.
Fig. 18

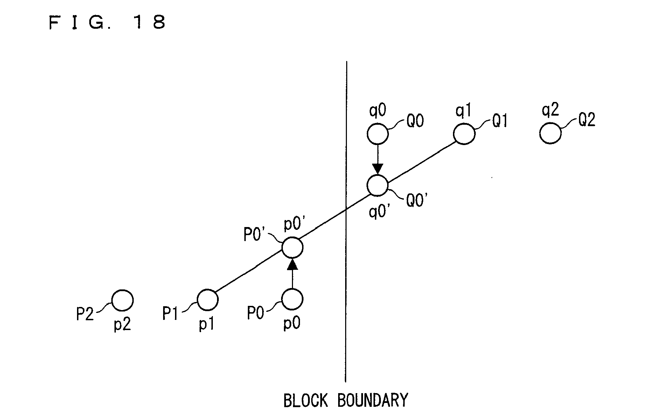

Fig. 18 schematically illustrates a filer process in a conventional technique.

Description of Embodiments

[Embodiment 1]

One embodiment of a filter device according to the present invention is described below as Embodiment 1, with reference to Fig. 1 to Fig. 14. The filter device of the present invention removes block noise occurring at a time of decoding encoded image data (image information) obtained by dividing image data into a plurality of blocks and encoding the plurality of blocks. Such block noise occurs especially markedly at a boundary between blocks adjacent to each other. The filter device of the present invention carries out a filtering process on a target pixel to be filtered, which is positioned in vicinity to the boundary between the adjacent blocks, so as to remove the block noise.

(Arrangement of Filter Device 1)

An arrangement of a filter device 1 of the present embodiment is illustrated in Fig. 1. Fig. 1 is a block diagram illustrating an essential part of the arrangement of the filter device 1. As illustrated in Fig. 1, the filter device 1 receives, as an input, an unfiltered pixel value (uncorrected pixel value) that has not been filtered yet, and supplies, as an output, a filtered pixel value (corrected pixel value) obtained after the filtering process is carried out. Pixel values may be received or supplied per pixel or per plural pixels positioned in vicinity to a block boundary for a target block including a target pixel to be filtered. Further, the filter device 1 refers to a size of the target block including the target pixel to be filtered, in order to determine whose pixel value is to be referred to at a time of calculating the filtered pixel value of the target pixel.

The filter device 1 includes, as illustrated in Fig. 1, a block-size determination section 10, a difference calculation section 11, a pixel-value calculation section 12, an adjacent-block-size determination section 13, and an output section 14. Each of the members is described below, more specifically.

(Block-size Determination Section 10)

The block-size determination section 10 determines whether or not a target block including a target pixel to be filtered, among a plurality of blocks into which image data is divided, has a size equal to or more than a threshold Th1.

The threshold Th1 to be used may be, for example, a value of an area of a block (a total number of pixels included in the bock). For example, for a threshold Th1 of 1024, the block-size determination section 10 determines a $32 \times 32$ block as a block having a size equal to or more than the threshold Th1, among blocks having sizes of $8 \times 8$, $16 \times 16$, and $32 \times 32$. It is also possible to use, as the threshold Th1, values other than the value of the area of the block. Examples of such values to be used as the threshold Th1 may be, for example, the number of pixels per column or per row in a block.

Note that in the specification of the present invention, the "block" to be filtered is the same as a unit block on which transformation or inverse transformation is to be carried out. That is, the "block size (a size of a block)" in the present specification is equal to a transformation size of the unit block on which transformation or inverse transformation is to be carried out. That is, the block size in the filter device 1 is equal to a transformation size of the unit block on which an image encoding device (not shown) carries out orthogonal transformation, while the block size is equal to a transformation size of the unit block on which an image decoding device (not shown) carries out inverse orthogonal transformation. For example, in a case where orthogonal transformation is carried out by use of an $8 \times 8$ DCT, the target block to be filtered is $8 \times 8$ in size.

Further, in some cases, the image encoding device may carry out shrinking/pixel skipping (sub-sampling) before the orthogonal transformation, and the image decoding device may carry out enlarging/interpolation after the inverse orthogonal transformation. In such cases, the block size of the target block to be filtered is not equal to the transformation size of the target block that has been subjected to the orthogonal transformation. That is, the block size of the target block to be filtered is equal to a block size of the target block that has not been subjected to the shrinking/pixel skipping (i.e., a block size of the target block that has been subjected to the enlarging/interpolation), which shrinking/pixel skipping is carried out before the orthogonal transformation. Note that the block size is not a scalar value, but a vector value indicated by width and height (width $\times$ height).

Here, "A $\times$ A" indicative of block size indicates the number of pixels in a lateral direction in a block and the number of pixels in a vertical direction in the block. That is, "$8 \times 8$" in the present specification or the like indicates a block with 8 pixels per row in the lateral direction and 8 pixels per column in the vertical direction, i.e., a block having 64 pixels in total.

(Difference Calculation Section 11)

The difference calculation section 11 calculates an absolute difference between pixel values. More specifically, the difference calculation section 11 calculates an absolute difference between (a) a pixel value of a boundary pixel in the target block, which boundary pixel is located next to a pixel in an adjacent block adjacent to the target block, and (b) a pixel value of an adjacent pixel in the adjacent block, which adjacent pixel is adjacent to the boundary pixel. Further, in some cases, the difference calculation section 11 calculates an absolute difference between pixel values of pixels in the target block. What absolute difference is calculated by the difference calculation section 11 is determined depending on size of the target block. What absolute difference is calculated on what occasion will be described later.

In the specification, the term "adjacent" indicates that a pixel or a block has contact with a base pixel or a base block in a vertical direction or lateral direction (horizontal direction). That is a pixel or block that is obliquely adjacent to the base pixel or base block is not included in the scope of the "adjacent pixel" or "adjacent block".

Further, the "absolute difference" in the specification indicates the absolute value of the difference between pixel values.

(Pixel-value Calculation Section 12)

The pixel-value calculation section 12 calculates a filtered pixel value of the target pixel in the target block, by carrying out a filtering process on the target pixel. How to calculate the filtered pixel value from an unfiltered pixel value of the target pixel is determined depending on how large the target block is. What calculation method is used on what occasion will be described later.

(Adjacent-block-size Determination Section 13)

The adjacent-block-size determination section 13 determines whether or not any of adjacent blocks adjacent to the target block has a size equal to or more than the threshold Th1, in a case where the target block has a size less than the threshold Th1. That is, the adjacent-block-size determination section 13 determines whether or not there is a block having a size equal to or more than the threshold Th1 among the adjacent blocks adjacent to the target block.

(Output Section 14)

The output section 14 replaces the unfiltered pixel value of the target pixel with the filtered pixel value calculated by the pixel-value calculation section 12. That is, the output section 14 is pixel-value replacing means for replacing a pixel value of the target pixel. A destination to which the filtered pixel value is supplied varies appropriately depending on what type of apparatus the filter device 1 is provided in and what the purpose of the filter device 1 is. For example, in a case where the filter device 1 is provided in an image decoding device as a loop filter, the output section 14 supplies the filtered pixel value to a frame memory in which a decoded image is stored.

(Overall of Operation of Filter Device 1)

Next will be described an overall of how the filter device 1 operates, with reference to Fig. 2. Fig. 2 is a flowchart illustrating the overall of how the filter device 1 operates.
Initially, the filter device 1 sets a target block including a target pixel to be filtered (Step S1). Subsequently, the block-size determination section 10 determines whether or not the target block has a size equal to or more than the threshold Th1 (Step S2). In a case where the size of the target block is equal to or more than the threshold Th1 (Yes in Step S2), the difference calculation section 11 calculates an absolute difference (Step S3). The absolute difference calculated in Step S3 will be described later, more specifically.
In a case where the absolute difference calculated in Step S3 is less than a threshold Th2 (second threshold), the pixel-value calculation section 12 calculates a filtered pixel value of the target pixel (Step S4). In a case where the absolute difference is equal to or more than the threshold Th2, the pixel-value calculation section 12 does not calculate the filtered pixel value of the target pixel. That is, the filter device 1 terminates the filtering process on the target pixel. Finally, the output section 14 outputs the filtered pixel value thus calculated (Step S5). The process carried out by the filter device 1 in the case where the size of the target block is equal to or more than the threshold Th1 is hereinafter referred to as Pattern A.
On the other hand, in a case where the size of the target block is less than the threshold Th1 (No in Step S2), the adjacent-block-size determination section 13 determines whether or not an adjacent block adjacent to the target block has a size equal to or more than the threshold Th1 (Step S6). In a case where the size of the adjacent block is equal to or more than the threshold Th1 (Yes in Step S6), the difference calculation section 11 calculates an absolute difference (Step S7). The absolute difference calculated by the difference calculation section 11 in Step S7 is different from the absolute difference calculated in Step S3. The absolute difference calculated in Step S7 will be described later, more specifically.
In a case where the absolute difference calculated in Step S7 is less than a given threshold, the pixel-value calculation section 12 calculates a filtered pixel value of the target pixel (Step S8). How to calculate the filtered pixel value in Step S8 is different from how to calculate the filtered pixel value in Step S4. Further, in a case where the absolute difference is not less than the given threshold, the pixel-value calculation section 12 does not calculate the filtered pixel value of the target pixel. That is, the pixel-value calculation section 12 terminates the filtering process on the target pixel.
Finally, the output section 14 outputs the filtered pixel value thus calculated (Step S5). The process carried out by the filter device 1 in the case where the size of the target block is less than the threshold Th1 and the size of the adjacent block is equal to or more than the threshold Th1 is hereinafter referred to as Pattern B.
Further, in a case where the size of the adjacent block is less than the threshold Th1 (No in Step S6), the difference calculation section 11 calculates an absolute difference (Step S9). The absolute difference calculated by the difference calculation section 11 in Step S9 is different from the respective absolute differences calculated in Step S3 and Step S7. The absolute difference calculated in Step S9 will be described later, more specifically.

In a case where the absolute difference calculated in Step S9 is less than a given threshold, the pixel-value calculation section 12 calculates a filtered pixel value of the target pixel (Step S10). How to calculate the filtered pixel value in Step S10 is different from how to calculate the filtered pixel value in Step S4 and Step S8. Further, in a case where the absolute difference is not less than the threshold, the pixel-value calculation section 12 does not calculate the filtered pixel value of the target pixel. That is, the pixel-value calculation section 12 terminates the filtering process on the target pixel.

Finally, the output section 14 outputs the filtered pixel value thus calculated (Step S5). The process carried out by the filter device 1 in the case where the size of the target block is less than the threshold Th1 and the size of the adjacent block is also less than the threshold Th1 is hereinafter referred to as Pattern C.

As described above, the process of the filter device 1 includes 3 patterns (Pattern A to Pattern C) and carries out one of the patterns depending on block size of a target block and block size of an adjacent block adjacent to the target block. The following deals with these 3 patterns, more specifically.

(Pattern A: Case Where Size of Target Block is Equal to or More Than Threshold Th1)

With reference to Fig. 3 to Fig. 6, the following describes a calculation method (Pattern A) for calculating a pixel value of a target pixel to be filtered, in a case where the size of a target block including the target pixel to be filtered is equal to or more than the threshold Th1.

The following description in this item takes as an example a case where a target image to be subjected to a filtering process is divided as illustrated in Fig. 3. Fig. 3 schematically illustrates one example of how an image is divided into blocks. As illustrated in Fig. 3, the target image to be subjected to a filtering process is divided into the following three types of blocks: (a) blocks having a size of 32 × 32; (b) blocks having a size of 16 × 16; and (c) blocks having a size of 8 × 8. That is, the image data illustrated in Fig. 3 is divided into blocks having different sizes.

Further, in this item, it is assumed that the threshold Th1 is "1024". Accordingly, in Fig. 3, blocks having a size equal to or more than the threshold Th1 are the blocks having a size of 32 × 32. That is, pixels on which a filtering process is to be carried out according to the process for Pattern A are pixels within shaded regions in Fig. 4. Fig. 4 schematically illustrates a region including pixels on which a filtering process is to be carried out, in each target block having a size equal to or more than the threshold Th1.

Fig. 5 schematically illustrates pixels included in a shaded region as illustrated in Fig. 4. That is, Fig. 5 schematically illustrates pixels in vicinity to a block boundary portion. In Fig. 5, one of the blocks adjacent to each other includes pixels Pi, and the other one of the blocks includes pixels Qi (i represents 0 to n, n is any integer). Note that "i" for the "pixel Pi" and the "pixel Qi" becomes smaller as closer to the block boundary.

Further, in Fig. 5, pi and qi indicate respective pixel values of the pixel Pi and the pixel Qi. Moreover, pk indicates an unfiltered pixel value of a target pixel Pk while pk' indicates a filtered pixel value of the target pixel Pk. In this case, k is an integer not more than a threshold Th3. In the following description, it is assumed that k equals 0 to 7, i.e., the threshold Th3 equals 7, as an example. Details about how to set the threshold Th3 will be described later, and therefore not explained here.

In Pattern A, the difference calculation section 11 calculates an absolute difference between a pixel value of a boundary pixel and a pixel value of a corresponding adjacent pixel. In a case where the absolute difference thus calculated is less than the threshold Th2, the pixel-value calculation section 12 calculates a corrected pixel value of a target pixel to be filtered, based on a pixel value of the target pixel and the pixel value of the above adjacent pixel.

A specific example is as follows: The difference calculation section 11 calculates an absolute difference d between (a) a pixel value $p0$ of a boundary pixel P0 in a target block, which boundary pixel P0 is placed next to a pixel in an adjacent block adjacent to the target block, and (b) a pixel value $q0$ of an adjacent pixel Q0 in the adjacent block, which adjacent pixel Q0 is adjacent to the boundary pixel P0. That is, in Step S3 in Fig. 2, the difference calculation section 11 calculates the absolute difference d, according to the following Formula (1):

$$d = ABS\ (p0 - q0)\ ...\ (1)$$

Then, the pixel-value calculation section 12 determines whether or not the absolute difference d calculated by the difference calculation section 11 is less than the threshold Th2. That is, the pixel-value calculation section 12 determines whether or not $d < \alpha$ is satisfied (a = threshold Th2). In a case where the absolute difference d is less than the threshold Th2, i.e., d < a is satisfied, the pixel-value calculation section 12 calculates a filtered pixel value pk' of a target pixel Pk based on an unfiltered pixel value pk of the target pixel Pk and the pixel value $q0$ of the adjacent pixel Q0.

More specifically, the filtered pixel value pk' is calculated according to the following Formula (2):

$$pk' = (W1 \times pk + W2 \times q0)/(W1 + W2) \ldots (2)$$

In Formula (2), W1 and W2 are given filter coefficients (weighting coefficients), which are set according to a pixel number counted from the boundary pixel and which satisfy $0 \leqq W1$ and $W2 \leqq W1 + W2$.

Exemplary filter coefficients for respective pixels are shown in Fig. 6. Fig. 6 illustrates exemplary filter coefficients of pixels P0 to P7 and a pixel Q0. Calculating formulae for finding respective filtered pixel values p0' to p7' of the target pixels P0 to P7 can be represented with the use of the filer coefficients shown in Fig. 6, as follows:

$$p0' = (4 \times p0 + 4 \times q0)/8$$

$$p1' = (4 \times p1 + 4 \times q0)/8$$

$$p2' = (5 \times p2 + 3 \times q0)/8$$

$$p3' = (5 \times p3 + 3 \times q0)/8$$

$$p4' = (6 \times p4 + 2 \times q0)/8$$

$$p5' = (6 \times p5 + 2 \times q0)/8$$

$$p6' = (6 \times p6 + 2 \times q0)/8$$

$$p7' = (7 \times p7 + 1 \times q0)/8$$

Finally, the output section 14 outputs the filtered pixel value pk' thus calculated by the pixel-value calculation section 12. A destination to which the output section 14 supplies the filtered pixel value pk' varies appropriately depending on what type of apparatus the filter device 1 is provided in.

The above description dealt with the case where the target pixel is a pixel Pk, as an example. However, the target pixel is not limited to this and may be a pixel Qk. In this case, the pixel value pk and the pixel value q0 in Formula (2) are replaced with a pixel value qk and a pixel value p0, respectively.

(Advantage of Operation in Pattern A)

As described above, in the process for Pattern A in the filter device 1, the filtered pixel value pk' of the target pixel Pk is calculated just from pixel values of two pixels, i.e., the pixel value pk of the target pixel Pk and the pixel value q0 of the adjacent pixel Q0. This is because in a block having such a large block size, an obtainable value of the pixel value pk' does not vary so much depending on whether or not the filtered pixel value pk' is calculated from pixel values of pixels in vicinity to the target pixel Pk.

More specifically, in a case of an encoding method in which data is divided into blocks having different sizes and the blocks are encoded, a region including high-frequency components (i.e., a region in which pixel values are largely different from each other) is encoded as a small-size block and a region including low-frequency components (i.e., a region in which pixel values are slightly different from each other) is encoded as a large-size block. Particularly, most blocks having a size largely exceeding an 8 × 8 block size, such as a 32 × 32 block size, may be regarded as regions including only low-frequency components.

For this reason, in such a large-size block, the difference between a pixel value pk of a target pixel Pk and pixel values of pixels in vicinity to the target pixel Pk (e.g., a pixel value pk-1 of a pixel Pk-1 and a pixel value pk+1 of a pixel Pk+1) is small. Accordingly, even if the pixels in vicinity to the target pixel Pk are referred to in addition to the pixel value pk of the target pixel Pk to calculate a filtered pixel value pk', an obtainable pixel value does not vary so much.

Indeed, with the use of pixel values of pixels around a target pixel when the target pixel is subjected to a filtering process, it is possible to restrain an obtainable pixel value from varying. However, this method, although effective for a pixel near a block boundary, is not necessary for a pixel distanced from the block boundary. In a large-size block, the number of target pixels distanced from the block boundary is increased as compared with a small-size block. This means that the number of target pixels that do not require referring to pixel values of pixels around them is increased.

Thus, in the filtering process on a block having a size equal to or more than the threshold Th1, a filtered pixel value can be sufficiently calculated with the use of just pixel values of the target pixel and the adjacent pixel. That is, the filter device 1 may calculate a filtered pixel value pk' of the target pixel Pk simply from pixel values of two pixels, i.e., a pixel value pk of the target pixel Pk and a pixel value q0 of the adjacent pixel Q0. This allows the filter device 1 to restrain an increase in the amount of calculation due to block size and to prevent a decoded image from degrading in image quality.

In the present specification, "prevent" does not mean that the degradation of image quality is completely prevented, but that the degradation of image quality is restrained even slightly as compared with a conventional technique.

(Pattern B: Case Where Size of Target Block is Less Than Threshold Th1 and Size of Adjacent Block is Equal to or More Than Threshold Th1)

Next will be explained a calculation method (Pattern B) for calculating a pixel value of a target pixel to be filtered, in a case where the size of a target block including the target pixel to be filtered is less than the threshold Th1 and the size of an adjacent block is not less than the threshold Th1. Similarly to the process for Pattern A, the following description in this item also takes as an example a case where a target image to be subjected to a filtering process is divided as illustrated in Fig. 3, and the threshold Th1 is "1024". That is, blocks having a size equal to or more than the threshold Th1 are blocks having a size of 32 × 32, and blocks having a size less than the threshold Th1 are blocks having a size of 8 × 8 and blocks having a size of 4 × 4.

Accordingly, pixels on which a filtering process is to be carried out according to the process for Pattern B are pixels within shaded regions in Fig. 7. Fig. 7 schematically illustrates a region including pixels on which the filtering process is to be carried out, in each target block, in a case where the size of the target block is less than the threshold Th1 and the size of an adjacent block is equal to or more than the threshold Th1.

In the description in this item, a pixel Qk shown in Fig. 5 is taken as a target pixel. Accordingly, a filtered pixel value obtained by filtering a pixel value qk of the pixel Qk is represented as a pixel value qk'. Here, k is an integer of not more than the threshold Th3. In the following description, it is assumed that the threshold Th3 equals 2, i.e., k equals 0 to 2, as an example.

In Pattern B, the difference calculation section 11 calculates an absolute difference d between (a) a pixel value q0 of the boundary pixel Q0 in a target block, which boundary pixel Q0 is located next to a pixel in an adjacent block adjacent to the target block, and (b) a pixel value p0 of an adjacent pixel P0 in the adjacent block, which adjacent pixel P0 is adjacent to the boundary pixel Q0, and (ii) an absolute difference ap between the pixel value q0 of the boundary pixel Q0 and a pixel value q2 of a pixel Q2. That is, in Step S7 in Fig. 2, the difference calculation section 11 calculates the absolute difference d and the absolute difference ap, according to the following Formulae (3) and (4):

$$d = \mathrm{ABS}(p0 - q0) \ \dots \ (3)$$

$$ap = \mathrm{ABS}(q2 - q0) \ \dots \ (4)$$

Then, the pixel-value calculation section 12 determines whether or not the absolute difference d and the absolute difference ap thus calculated by the difference calculation section 11 are less than a given threshold $\alpha1$ and a given threshold $\beta1$, respectively. That is, the pixel-value calculation section 12 determines whether or not $d < \alpha1$ and $ap < \beta1$ are satisfied.

In a case where the absolute difference d and the absolute difference ap thus calculated by the difference calculation section 11 satisfy d < α1 and ap < β1, the pixel-value calculation section 12 calculates a filtered pixel value qk' of a target pixel Qk based on the pixel value p0 of the adjacent pixel P0, an unfiltered pixel value qk of the target pixel Qk, and pixel values of pixels in vicinity to the target pixel Qk.

Typical calculating formulae for respective filtered pixel values q0', q1', and q2' of target pixels Q0, Q1, and Q2 are exemplified as follows:

$$q0' = (q2 + 2 \times q1 + 2 \times q0 + 3 \times p0)/8$$

$$q1' = (q2 + q1 + q0 + p0)/4$$

$$q2' = (2 \times q3 + 2 \times q2 + q1 + q0 + 2 \times p0)/8$$

The values of the filter coefficients in the formulae are just examples, and can be changed as appropriate.

Finally, the output section 14 outputs the filtered pixel value qk' thus calculated by the pixel-value calculation section 12.

(Pattern C: Case Where Size of Target Block is Less Than Threshold Th1 and Size of Adjacent Block is also Less Than Threshold Th1)

Last of all, the following describes a calculation method (Pattern C) for calculating a pixel value of a target pixel to be filtered, in a case where the size of a target block including the target pixel to be filtered is less than the threshold Th1 and the size of an adjacent block is less than the threshold Th1. Similarly to the processes for Pattern A and Pattern B, the following description takes as an example a case where image data is divided as illustrated in Fig. 3. In this case, pixels on which a filtering process is to be carried out according to the process for Pattern C are pixels within all regions except for the shaded regions in Fig. 4 and Fig. 7.

The process for Pattern C may be carried out in the same manner as processes in conventional filter devices. More specifically, the process for Pattern C is as below. In the following description in this item, the pixel Pk shown in Fig. 5 is taken as a target pixel Pk. Accordingly, pk' indicates a filtered pixel value obtained by filtering a pixel value pk of the pixel Pk. Here, k is an integer of not more than the threshold Th3. In the following description, it is assumed that the threshold Th3 equals 2, i.e., k equals 0 to 2, as an example.

The difference calculation section 11 calculates (i) an absolute difference d between (a) a pixel value p0 of a boundary pixel P0 in a target block, which boundary pixel P0 is located next to a pixel in an adjacent block adjacent to the target block, and (b) a pixel value q0 of an adjacent pixel Q0 in the adjacent block, which adjacent pixel Q0 is adjacent to the boundary pixel P0, and (ii) an absolute difference ap between a pixel value p0 of the boundary pixel P0 and a pixel value p2 of a pixel P2. That is, in Step S9 in Fig. 2, the difference calculation section 11 calculates the absolute difference d and the absolute difference ap, according to the following Formulae (5) and (6):

$$d = ABS(p0 - q0) \ldots (5)$$

$$ap = ABS(p2 - p0) \ldots (6)$$

Then, the pixel-value calculation section 12 determines whether or not the absolute difference d and the absolute difference ap thus calculated by the difference calculation section 11 are less than a given threshold a2 and a given threshold β2, respectively. That is, the pixel-value calculation section 12 determines whether or not d < α2 and ap < β2 are satisfied.

In a case where the absolute difference d and the absolute difference ap thus calculated by the difference calculation section 11 satisfy d < α2 and ap < β2, the pixel-value calculation section 12 calculates a filtered pixel value pk' of a target pixel Pk based on an unfiltered pixel value pk of the target pixel Pk and pixel values of pixels in vicinity to the target pixel Pk.

Typical calculating formulae for respective filtered pixel values p0', p1', and p2' of target pixels P0, P1, and P2 are exemplified as follows:

$$p0' = (p2 + 2 \times p1 + 2 \times p0 + 2 \times q0 + q1)/8$$

$$p1' = (p2 + p1 + p0 + q0)/4$$

$$p2' = (2 \times p3 + 3 \times p2 + p1 + p0 + q0)/8$$

The values of the filter coefficients in the formulae are just examples, and can be changed as appropriate.

Finally, the output section 14 outputs the filtered pixel value pk' thus calculated by the pixel-value calculation section 12.

The target pixel may be a pixel Qk. In this case, "p" in the above formulae may be replaced with "q". More specifically, the following formulae can be used:

$$q0' = (q2 + 2 \times q1 + 2 \times q0 + 2 \times p0 + p1)/8$$

$$q1' = (q2 + q1 + q0 + p0)/4$$

$$p2' = (2 \times q3 + 3 \times q2 + q1 + q0 + p0)/8$$

In a case where the adjacent block adjacent to the target block has a size equal to or more than the threshold Th1, block noise is more likely to occur at a block boundary significantly, as compared with a case where the size of the adjacent block is less than the threshold Th1. This is because in a block having a size larger than the threshold Th1, differences between pixel values are small in the block, i.e., an image of the block is flat. For this reason, it is preferable that the filtering process for Pattern B be carried out at a filter strength greater than that of the filtering process for Pattern C.

That is, when the thresholds a and $\beta1$ in Pattern B are compared with the thresholds $\alpha2$ and $\beta2$ in Pattern C, it is preferable that $\alpha1$ is larger than $\alpha2$ and $\beta1$ is larger than $\beta2$. This allows the process for Pattern B to readily carry out filtering, thereby resulting in that strong filtering can be carried out as compared with the process for Pattern C.

Further, in the process for Pattern B, the respective values of the filter coefficients, by which respective pixel values are multiplied, may be set to obtain a low-pass effect higher than in the process for Pattern C. Even in this case, strong filtering can be carried out on target pixels in the process for Pattern B as compared with the process for Pattern C.

(Modified Example of Pattern A)

As described above, in the filtering method according to the process for Pattern A, even in a case where components vertical to a boundary direction in the adjacent block adjacent to the target block have largely different pixel values, i.e., pixel values near the pixel value q0 are largely different, only the pixel value q0 of the adjacent pixel Q0 is used. However, in regard to a pixel value of the adjacent pixel in the adjacent block adjacent to the target block, in a case where pixel values near the pixel value of the adjacent pixel are largely different as such, the differences between the pixel values may affect the target block when the target block is filtered. In this case, the target block thus filtered may look wavy (causes linear noise). Such noise is particularly noticeable when a filtering-target area is large. This is most likely to cause a decoded image to look unnatural with eyes.

In such a case, it is preferable not to use the pixel value q0 of the adjacent pixel Q0 without any modification to calculate a pixel value pk' of the target pixel Pk, but to filter the pixel value q0 of the adjacent pixel Q0 in advance and use a filtered pixel value of the adjacent pixel Q0 to calculate the pixel value pk'. The following describes details of a filtering process (modified example of the process for Pattern A) carried out in a case where the adjacent pixel is filtered in advance.

Fig. 8 illustrates a surrounding area including the area illustrated in Fig. 5. More specifically, Fig. 8 illustrates not just one boundary adjacent to a target block, but boundaries adjacently surrounding the target block. In Fig. 8, out of blocks adjacent to each other, one includes pixels Pij and the other one includes pixels Qij (i represents 0 to n, n is any integer). Note that "i" for the "pixel Pij" and the "pixel Qij" becomes smaller as closer to the block boundary. Further, "j" is an index indicative of a component vertical to the boundary and takes a value from 0 to "'the number of pixels aligning in a vertical direction in a target block' - 1".

In order to calculate pixel values pij' of pixels Pij, a pixel value q0j of a corresponding adjacent pixel Q0j in an adjacent block is filtered in advance. Then, each of the pixel values pij' is calculated by referring to the filtered pixel value q0j' thus calculated.

More specifically, typical calculating formulae for finding filtered pixel values p0j' to p7j' of target pixels P0j to P7j are exemplified as follows:

$$p0j' = (4 \times p0j + 4 \times q0j')/8$$

$$p1j' = (4 \times p1j + 4 \times q0j')/8$$

$$p2j' = (5 \times p2j + 3 \times q0j')/8$$

$$p3j' = (5 \times p3j + 3 \times q0j')/8$$

$$p4j' = (6 \times p4j + 2 \times q0j')/8$$

$$p5j' = (6 \times p5j + 2 \times q0j')/8$$

$$p6j' = (6 \times p6j + 2 \times q0j')/8$$

$$p7j' = (7 \times p7j + 1 \times q0j')/8$$

The pixel value q0j' of the pixel Q0j may be calculated so that a low-pass effect is obtained between pixels aligning vertically to a boundary direction.

For example, q0k' may be calculated according to the formula:

$$q0k' = (5 \times q0k\text{-}1 + 6 \times q0k + 5 \times q0k\text{+}1)/16$$

Note that k is any integer within a range that j may take.

Such a process can prevent occurrence of block noise in a decoded image, even if pixel values are largely different from each other in vicinity to an adjacent pixel.

Further, as a filtering-target area is broader, such differences in pixel values are continued longer in a specific direction (horizontal direction or vertical direction). This is highly likely to cause block noise occurring at the block boundary to be noticeable. That is, even if the pixel value q0j' of the pixel Q0j is calculated in the above manner, there may happen a case where block noise occurring between the target block and the adjacent block appears outstandingly.

In this case, it is preferable that the pixel value q0k' to be used be changed as the target pixel to be filtered is positioned farther from the block boundary.

More specifically, it is preferable to use, instead of the pixel value qOk', a pixel value q0k" that is obtained by use of the pixel value q0k' of the pixel Q0k, according to the following formula:

$$q0k'' = (5 \times q0k\text{-}1' + 6 \times q0k' + 5 \times q0k\text{+}1')/16$$

Similarly, for a pixel value q0k''', it may be obtained by use of the pixel value q0k" of the pixel Q0k, according to the following formula:

$$q0k''' = (5 \times q0k\text{-}1'' + 6 \times q0k'' + 5 \times q0k\text{+}1'')/16$$

Accordingly, calculating formulae for finding the filtered pixel values p0j' to p7j' of the target pixels P0j to P7j are exemplified as follows:

$$p0j' = (4 \times p0j + 4 \times q0j')/8$$

$$p1j' = (4 \times p1j + 4 \times q0j')/8$$

$$p2j' = (5 \times p2j + 3 \times q0j'')/8$$

$$p3j' = (5 \times p3j + 3 \times q0j'')/8$$

$$p4j' = (6 \times p4j + 2 \times q0j''')/8$$

$$p5j' = (6 \times p5j + 2 \times q0j''')/8$$

$$p6j' = (6 \times p6j + 2 \times q0j''')/8$$

$$p7j' = (7 \times p7j + 1 \times q0j''')/8$$

Note that it is not preferable to calculate pixel values q0j', q0j", and the like of a corresponding adjacent pixel in the adjacent block, every time a filtering process is carried out on one boundary in the target block to be filtered. This is because a process amount is increased. In other words, it is preferable that pixel values q0j', q0j", and the like of adjacent pixels in the adjacent block be calculated in advance before the filtering process is carried out on the target block.

Further, the modified example as above takes as an example a case where the block boundary lies in the vertical direction. However, the process in the modified example is applicable to a case where the block boundary lies in the horizontal direction.

(Details of How to Set Threshold Th3)

Next will be explained how to set the threshold Th3, that is, a range of target pixels to be filtered in a target block. The threshold Th3 indicates a pixel number of a given pixel included in a row or column in a given block, counted from a boundary pixel, which is located next to an adjacent block adjacent to the given block. The given pixel has a pixel value that takes, in the first place, a predetermined absolute difference with a pixel value of a pixel followed by the given pixel in a row or column direction, where the predetermined absolute difference indicates an absolute difference equal to or more than a threshold Th 4 (third threshold). The threshold Th3 may be a value that is set in advance or a value that is set according to a predetermined algorithm. In other words, among pixels included in a given row or column in a given block, the filter device 1 takes, as target pixels, pixels from (a) a boundary pixel, which is located next to an adjacent block adjacent to the given block, up to (b) a given pixel having a pixel value that takes, in the first place, a predetermined absolute difference with a pixel value of a pixel followed by the given pixel in a row or column direction. The predetermined absolute difference herein indicates an absolute difference equal to or more than the threshold Th 4.

In the present specification, the "pixel number" indicates a number of a pixel counted from the boundary pixel as a base point. More specifically, with reference to Fig. 5, in a case where the pixel P0 is a base point, a pixel corresponding to a pixel number "2" is a pixel P2. Note that a corresponding pixel to a pixel number "0" is a pixel P0.

The following describes how to set the threshold Th3, with reference to Fig. 9. Fig. 9 is a flowchart illustrating how to set the threshold Th3. In this item, a pixel Pk indicates a given pixel in a target block, and a pixel value pk indicates a pixel value of the pixel Pk. Further, k is any integer. A pixel of k = 0, i.e., a pixel P0 is a boundary pixel in the target block. As the value of k is larger, the pixel Pk is more distanced away from the boundary pixel. That is, the value of k coincides with the pixel number of the pixel Pk.

Initially, the filter device 1 sets the value of k to "0", that is, sets a pixel P0 as a target pixel (Step S20). Subsequently, the difference calculation section 11 calculates an absolute difference between a pixel value p0 of the pixel P0 and a pixel value q0 of an adjacent pixel Q0 which is in an adjacent block adjacent to the target block and which is adjacent to the pixel P0 (Step S21). Then, the difference calculation section 11 determines whether or not the absolute difference thus calculated is equal to or more than the threshold Th2 (Step S22). In a case where the calculated absolute difference is equal to or more than the threshold Th2 (Yes in Step S22), the filter device 1 terminates a filtering process on the target pixel. This is the same as the process in Step S4, which has been described in relation to the operation of the filter device 1 (Fig. 2).

In a case where the calculated absolute difference is less than the threshold Th2 (No in Step S22), the filter device 1 adds "1" to the value of k (Step S23). Subsequently, the difference calculation section 11 calculates an absolute difference between a pixel value pk of a pixel Pk and a pixel value p(k-1) of a pixel P(k-1) (Step S24). Then, the filter device 1 determines whether or not the absolute difference calculated in Step S24 is equal to or more than the threshold Th 4 (Step S25). The threshold Th 4 is set in advance in the filter device 1. The threshold Th 4 may be a fixed value in the filter device 1, or may be set by a user optionally.

In a case where the absolute difference calculated in Step S24 is not less than the threshold Th 4 (No in Step S25), the filter device 1 sets a value obtained by subtracting "1" from a current value of k, as the threshold Th3 (Step S26). That is, in a case of k = 3, the threshold Th3 is 2, so that the filter device 1 takes, as the target pixel, pixels from the pixel P0 to a pixel P2.

In contrast, in a case where the absolute difference calculated in Step S24 is less than the threshold Th 4 (Yes in Step S25), the filter device 1 determines whether or not the current value of k is less than a predetermined value Tn (Step S26). In a case where the current value of k is not less than the predetermined value Tn (No in Step S27), the filter device 1 sets the current value of k as the threshold Th3 (Step S28). In a case of k = 3, the threshold Th3 is 3, so that the filter device 1 takes, as the target pixel, pixels from the pixel P0 to a pixel P3.

In a case where the current value of k is less than the predetermined value Tn (Yes in Step S27), the filter device 1 adds "1" to the current value of k (Step S23), and carries out the processes from Step S24 again. Thus, the filter device 1 repeats the processes until an absolute difference calculated in Step S24 becomes not less than the threshold Th 4 or the value of k becomes not less than the predetermined value Tn.

The predetermined value Tn is a value that is set in advance in the filter device 1. The predetermined value Tn defines a limit value of a pixel that may possibly become a target pixel in the target block. As describe above, a pixel positioned distanced from the block boundary, that is, a pixel having a large pixel number counted from the boundary pixel is not necessary to be subjected to a filtering process. Accordingly, the predetermined value Tn is set so as to prevent that the filtering process is performed on such a pixel that is not necessary to be filtered, in the case where the pixel has an absolute difference calculated in Step S24 that is less than the threshold Th 4.

(Advantage in Case Where Threshold Th3 is Set according to Predetermined Algorithm)

In general encoding techniques, a predicted image, which is approximate to a target image to be encoded, is generated. Then, a prediction error between the target image to be encoded and the predicted image is transformed and encoded. In view of this, pixel values in a target block to be filtered are values obtained by decoding with a sum of the predicted image and the prediction error (inverse-transformed signal). In a case where a block on which the transformation is to be carried out is large in size, it is expectable that pixel values in a corresponding block in the prediction error are slightly different from each other. However, if pixel values are largely different in the predicted image, the differences between pixel values may possibly be large in a decoded image obtained by the sum of the predicted image and the prediction error. That is, in a case where the pixel values in the decoded image are largely different from each other due to the predicted image, it is necessary to set a filtering-target area to be small.

However, in the filtering process techniques disclosed in Non-Patent Literature 1 and Patent Literature 1, although it is possible to determine whether or not a filtering process is carried out all over a block boundary, it is not possible to partially carry out the filtering process on the block boundary.

According to the above arrangement of the filter device 1 of the present embodiment, it is possible to solve the above problem. That is, the filter device 1, as has been already described, calculates an absolute difference between adjoining pixels, so as to set a value of the threshold Th3 in a given column or row in a target block as appropriate. This makes it possible to appropriately change the range of target pixels to be filtered, in the given column or row in the target block, in a case where pixel values are supposed to differ from each other in a decoded image. If the pixel values are supposed not to differ so much in the decoded image, the filtering process may be carried out up to a pixel having a predetermined pixel number.

(Additional Matters)

In the filtering process techniques disclosed in Non-Patent Literature 1 and Patent Literature 1, values (for example, ABS(p2 - p0), ABS(p1 - p0)) corresponding to variations of pixel values between pixels is found as values indicative of a state of a boundary, so as to determine whether or not a filtering process is carried out, based on the values thus found. However, the determination is carried out simply to determine whether or not the filtering process is carried out all over a target boundary to be filtered. That is, the determination is not for determining up to which pixel from the block boundary the filtering process is carried out.

(Modified Example of How to Set Threshold Th3)

Next will be explained a modified example of how to set the threshold Th3. The modified example is a method premised on a case where pixel values may be largely different between components vertical to a boundary direction in an adjacent block adjacent to a target block, i.e., pixel values may largely differ in vicinity to a pixel Q0. Here, a threshold "Th3j" and a predetermined value "Tnj" respectively indicate the threshold Th3 and the predetermined value Tn at a time when a filtering process is carried out on a pixel value pij of a pixel Pij in Fig. 8.

In this modified example, a magnitude MAGj indicative of how much pixel values of pixels differ in vicinity to a pixel having a pixel value q0j is calculated based on a sum and the like of absolute differences between the pixel value q0j and the pixel values of the pixels in vicinity to the pixel having the pixel value q0j.

More specifically, the magnitude MAGj is calculated according to the following formula:

$$\mathrm{MAGk = ABS(q0k - q0k\text{-}1) + ABS(q0k - q0k\text{+}1)}$$

Here, k is any integer within a range that j may take.

Subsequently, a value of the threshold Th3j is selected from a plurality of candidate values, based on the magnitude MAGj thus calculated. For example, in a case of MAGj > $\gamma$1, the threshold Th3j is set to 2. In a case of MAGj $\leq \gamma$1, the threshold Th3j is set to 4. In a case of MAGj $\leq \gamma$2, the threshold Th3j is set to 8. Note that $\gamma$1 and $\gamma$2 are predetermined thresholds, and for example, $\gamma$1 equals 8 and $\gamma$2 equals 4.

Further, the predetermined value Tnj can be also set by use of MAG, similarly to the threshold Th3j. For example, in a case of MAGj > $\gamma$1, the predetermined value Tnj is set to 2. In a case of MAGj $\leq \gamma$1 the predetermined value Tnj is set to 4. In a case of MAGj $\leq \gamma$2, the predetermined value Tnj is set to 8.

Such a method can be used together with the aforementioned method that uses an absolute difference between pixel values of pixels.

In order to retrain a change in filtering-target areas, it is preferable to use, instead of MAGj, a value obtained by carrying out low-pass filtering on MAGj.

More specifically, MAGk' is used instead of MAGk, which MAGk' can be calculated according to a formula using MAGk as follows:

$$MAGk' = (MAGk-1 + 2 \times MAGk + 2 \times MAGk+1)/4$$

As another method to restrain the change in filtering-target areas, it may be also possible to use, instead of the threshold Th3j, a value obtained by carrying out low-pass filtering on the threshold Th3j.

In this case, such a threshold Th3k' may be used, which is calculated according a formula using the threshold Th3k as follows:

$$Threshold\ Th3k' = (Th3k-1 + 2 \times Th3k + 2 \times Th3k+1)/4$$

With the use of the aforementioned modified example of how to set the threshold Th3, even in a case where, in an adjacent block adjacent to a target block, pixel values are largely different between components vertical to a boundary direction, it is possible to prevent that the target block on which the filtering process is carried out looks wavy (causes linear noise).

(Additional Matters)

The predetermined thresholds Th2, Th4, Tn, $\alpha$, $\beta$, $\alpha$1, $\beta$1, $\alpha$2, $\beta$2, $\gamma$1, and $\gamma$2 used in the aforementioned description are preferably changed according to a quantization parameter. That is, as the quantization parameter becomes larger, it is preferable that these thresholds be changed larger.

Further, it is preferable that a range of target pixels in a target block vary depending on how large the target block is. That is, in a case where the threshold Th3 is not set according to a state of the boundary, the threshold Th3 may be determined per block size. In this case, the threshold Th3 is set to be larger as the block size is larger. In this case, the predetermined value Tn may be set per block size in such a manner that the predetermined value Tn is larger as the block size is larger.

(Planar Filtering process)

In the filtering process techniques disclosed in Non-Patent Literature 1 and Patent Literature 1, two block boundaries (a vertical boundary and a horizontal boundary) for a target block including target pixels to be filtered are to be processed in turn. However, the filtering process techniques as disclosed in Non-Patent Literature 1 and Patent Literature 1 that carry out a filtering process on the vertical boundary and the horizontal boundary in turn cause degradation in image quality of a decoded image, as compared with a case where the filtering process is carried out simultaneously on the vertical boundary and the horizontal boundary at once.

More specifically, in a region like a corner of a target block (see Fig. 10) that is closer to both a horizontal boundary portion lying between the target block and its adjacent block and a vertical boundary portion lying between the target block and its another adjacent block, a filtering process is carried out separately in a horizontal direction and in a vertical direction. Such double filtering processes results in an excessively strong effect of smoothness obtained by filtering. This causes degradation in image quality of a decoded image. Further, There is a difference in weighting between in the horizontal direction and in the vertical direction. This further degrades image quality of the decoded image.

In view of this, in such a region like a corner of a target block that is closer to both a horizontal boundary portion lying between the target block and its adjacent block and a vertical boundary portion lying between the target block and its another adjacent block, it is preferable to simultaneously carry out a filtering process in the horizontal direction and the vertical direction. That is, the filtering process with respect to the horizontal direction and the filtering process with respect to the vertical direction are carried out at the same time as one process. This prevents that the filtering process is carried out doubly. In the present specification, the filtering process carried out in the horizontal direction and the vertical direction at the same time is referred to as "planar filtering process".

Fig. 10 illustrates a region, in a target block, which region is closer to both a horizontal boundary portion between the target block and its adjacent block and a vertical boundary portion between the target block and its another adjacent block. More specifically, pixels included in a shaded region in a block X (target block) have pixel numbers not more than the threshold Th 3 from a boundary pixel of a boundary (horizontal boundary) between the block X and a block Y, while having pixel numbers not more than the threshold Th3 from a boundary pixel of a boundary (vertical boundary) between the block X and a block Z.

An exemplary pixel in the shaded region in Fig. 10 is illustrated in Fig. 11. A pixel Pij illustrated in Fig. 11 is a pixel included in the shaded region in the block X in Fig .10. Further, in Fig. 11, a pixel Q0j is an adjacent pixel that is closest to the pixel Pij in a row direction and a pixel Ri0 is an adjacent pixel that is closest to the pixel Pij in a column direction.

An adjacent block in which the pixel Q0j is included is a block Z, which is adjacent to the block X in a lateral direction. An adjacent block in which the pixel Ri0 is included is a block Y, which is adjacent to the block X in a vertical direction. In other words, the pixel Pij in the block X is apart from the pixel Q0j by "i" pixels in the row direction while being apart from the pixel Ri0 by "j" pixels in the column direction. Further, "i" and "j" are values not more than the threshold Th3. In the present specification, "row" indicates a line in a vertical direction, and "column" indicates a line in a lateral direction.

Pixels on which the planer filtering process is to be carried out are preferably pixels each of which has a pixel number not more than the threshold Th3 from the boundary pixel of the vertical boundary in Fig. 10, and each of which has a pixel number not more than the threshold Th3 from the boundary pixel of the horizontal boundary. In view of this, in a case where the filtering process is carried out on the shaded regions in Fig. 4, the planar filtering process is carried out only on the shaded regions in Fig. 12. That is, the shaded regions in Fig. 4 except for overlapping regions with the shaded regions in Fig. 12 are subjected to the filtering process either in the horizontal direction or the vertical direction.

(Details of Planar Filtering Process)

Next will be explained how to calculate a filtered pixel value in the planar filtering process, more specifically. The present description in this item takes, as an example, a case where a target pixel Pij is included in a block having a size of 32 × 32, an adjacent pixel for the pixel Pij in a row direction is a pixel Q0j, and an adjacent pixel for the pixel Pij in a column direction is a pixel Ri0. Further, in the present item, an unfiltered pixel value of the pixel Pij is referred to as a pixel value pij, a pixel value of the pixel Q0j is referred to as a pixel value q0j, a pixel value of the pixel Ri0 is referred to as ri0, and a filtered pixel value of the pixel Pij is referred to as a pixel value pij'.

How to calculate a filtered pixel value of a target pixel in the planer filtering process is basically the same as how to calculate a filtered pixel value in Pattern A. However, for the planar filtering process, a pixel value of an adjacent pixel adjacent to a boundary pixel in a row direction and a pixel value of another adjacent pixel adjacent to another boundary pixel in a column direction are both taken as the pixel value of the adjacent pixel. That is, pixel values of two adjacent pixels, i.e., the pixel value q0j of the adjacent pixel Q0j and the pixel value ri0 of the adjacent pixel R10, are used.

Accordingly, the pixel-value calculation section 12 calculates the filtered pixel value pij' of the target pixel Pij based on the pixel value pij', the pixel value q0j, and the pixel value ri0. More specifically, the pixel-value calculation section 12 calculates the filtered pixel value pij' according to the following formula (7):

$$\text{pij'} = (\text{WP} \times \text{pij} + \text{WV} \times \text{q0j} + \text{WH} \times \text{ri0})/(\text{WP} + \text{WV} + \text{WH})$$

$$\dots (7)$$

Note that WP, WV, and WH are filter coefficients: WH is a filter coefficient set according to a distance (pixel number) from a boundary pixel P0j in the row direction; WV is a filter coefficient set according to a distance (pixel number) from a boundary pixel Pi0 in the column direction; and WP is a filter coefficient set according to the values of WV and WH. That is, WV is obtained such that WV = 16 - i, and WH is obtained such that WH = 16 - j. Further, WP is obtained such that WP = 32 - (WH or WV). One of WH and WV that has a larger value is used to calculate WP. That is, in a case where the target pixel has a pixel number of 3 in a horizontal direction and a pixel number of 1 in a vertical direction, the value of WH is used. Examples of WV, WH, and WP are shown in (a), (b), and (c) of Fig. 13, respectively.

In the formula (7), the value of (WP + WV + WH), i.e., a divisor does not become a power of 2, which may result in that a calculation amount of the division may be increased. In view of this, a sum of filter coefficients WP', WV', and WH' which becomes a power of 2 (for example, 1024) may be used as the divisor instead. When the divisor is a power of 2, it is possible to use a shift calculation instead of the division.

Such filter coefficients WP', WV', and WH' can be calculated according to the following formulae (8) to (11):

$$WV' = m \times WV \quad \ldots (8)$$

$$WH' = m \times WH \quad \ldots (9)$$

$$WP' = 1024 - (WV' + WH') \quad \ldots (10)$$

$$m = 1024/(WP + WV + WH) \quad \ldots (11)$$

In the formulae, "m" may be set by referring to a table in which the value of (WP + WV + WH) and the value of m are stored in association with each other.

In this case, the pixel value pij' is calculated according to the following formula (12):

$$pij' = (WP' \times pij + WV' \times q0j + WH' \times ri0) >> 10 \ldots (12)$$

(a) and (b) of Fig. 14 respectively illustrate examples of the filter coefficients WV' and WP'. No example of WH' is shown. However, WH' can be obtained by replacing the term "Horizontal" with the term "Vertical", in (a) of Fig. 4.

(Advantage of Planar Filtering Process)

As described above, the filter device 1 carries out the planer filtering process on a target pixel, thereby preventing that a filtering process is doubly carried on the target pixel in a horizontal direction and in a vertical direction.

As a result, it is possible to further prevent degradation in image quality of a decoded image as compared with a case where a filtering process is carried out separately in the horizontal direction in the vertical direction in turn. Further, it is also possible to reduce a processing amount in the filtering process.

[Embodiment 2]

(Arrangement of Image Decoding Device 100)

The following describes an image decoding device including the filtering device of the present invention, as Embodiment 2, with reference to Fig. 15. Fig. 15 is a block diagram illustrating an essential part of an arrangement of an image decoding device 100 according to Embodiment 2. The same members as in Embodiment 1 have the same reference signs as in Embodiment 1, and therefore are not explained here.

As illustrated in Fig. 15, the image decoding device 100 includes a variable length coding decoding section 101, an inverse quantization/inverse transformation section 102, a predicted image generation section 103, a frame memory 104, a block-size managing section 105, and a filter device 1. In the image decoding device 100, the members except the filter device 1 may be conventional members that can be used in a conventional image decoding device.

The following describes (i) the members except for the filter device 1, which has been specifically described in Embodiment 1, and (ii) how the image decoding device 100 operates.

(Operation of Image Decoding Device 100)

The variable length code decoding section 101 carries out a variable length decoding process on encoded data indicative of an encode parameter such as prediction error data of a target block to be decoded. The inverse quantization/ inverse transformation section 102 carries out inverse quantization on input parameters and then inverse transformation on the input parameters. More specifically, the inverse quantization/inverse transformation section 102 carries out inverse quantization on quantization coefficients of decoded prediction error data and then outputs the inversely-quantized quantization coefficients. Further, the inverse quantization/inverse transformation section 102 carries out inverse orthogonal transformation on transformation coefficients of the prediction error data and then outputs the transformation coefficients thus subjected to the inverse orthogonal transformation. Moreover, the block-size managing section 105 stores a transformation size decoded in the variable length decoding process. As a transformation method in the inverse transformation, the orthogonal transformation is generally used. However, the transformation method is not limited to this. Examples of the transformation method may be: a method using a filter bank typified by QMF; transformation according to a non-orthogonal base, typified by a Gabor function; and wavelet transformation.

A signal inversely-transformed by the inverse quantization/inverse transformation section 102 is added to a predicted image generated by the predicted image generation section 103, and outputted as a decoded image. The decoded image thus outputted is stored in the frame memory 104.

The filter device 1 obtains, from the block-size managing section 105, a block size of a target block including a target pixel to be filtered and a block size of a block adjacent to the target block. Further, the filter device 1 outputs a filtered pixel value by referring to a pixel value stored in the frame memory 104. That is, a filtered pixel value of a pixel having been subjected to a filtering process in the filter device 1 is stored in the frame memory 104. At this time, in the frame memory 104, an unfiltered pixel value is replaced with the filtered pixel value obtained by the filter device 1.

A filtered image stored in the frame memory 104 is used by the predicted image generation section 103 to generate a predicted image. Further, an image filtered by the filter device 1 is outputted to an outside of the image decoding device 100. That is, the filter device 1 is used as a loop filter (i.e., a filter for an image to be stored in the frame memory) in the image decoding device 100 or alternatively as a post filter (i.e., a filter for an output image).

(Additional Matters)

The present embodiment exemplifies a case where the image decoding device 100 is provided with the filter device 1. In addition to this, such an arrangement is also possible that the filter device 1 is provided in an image encoding device as a loop filter. In this case, members except for the filter device 1 may be conventional members that can be used in a conventional image encoding device.

(Program and Storage Medium)

The blocks of the filter device 1 and the image decoding device 100 may be realized by way of hardware or software as executed by a CPU (Central Processing Unit) as follows.

That is, the filter device 1 and the image decoding device 100 include a CPU and memory devices (memory media). The CPU executes instructions in programs realizing each function. The memory devices include a ROM (read only memory) which contains programs, a RAM (random access memory) to which the programs are loaded, and a memory containing the programs and various data. The objective of the present invention can also be achieved by a given storage medium, when the filter device 1 and the image decoding device 100 are arranged as such.

The storage medium may be a computer-readable storage medium containing control program code (executable program, intermediate code program, or source program) for the filter device 1 and the image decoding device 100, which is software realizing the aforementioned functions. The filter device 1 and the image decoding device 100 may be provided with the storage medium, so that the filter device 1 and the image decoding device 100 (or CPU, MPU) as the computer retrieve and execute the program code contained in the storage medium thus provided therein.

The storage medium from which the filter device 1 and the image decoding device 100 retrieve the program code is not limited in any particular structure or type. The storage medium may be, for example, a tape, such as a magnetic tape or a cassette tape; a magnetic disk, such as a floppy (Registered Trademark) disk or a hard disk, or an optical disk, such as CD-ROM/MO/MD/DVD/CD-R; a card, such as an IC card (memory card) or an optical card; or a semiconductor memory, such as a mask ROM/EPROM/EEPROM/flash ROM.

The object of the present invention is achievable when the filter device 1 and the image decoding device 100 may be arranged to be connectable to a communications network. In this case, the program code may be delivered to the filter device 1 and the image decoding device 100 over the communications network. The communications network is not limited in any particular type or manner provided that the program code can be delivered to the filter device 10 and the image decoding device 100 over the communications network, and may be, for example, the Internet, an intranet, extranet, LAN, ISDN, VAN, CATV communications network, virtual dedicated network (virtual private network), telephone line network, mobile communications network, or satellite communications network.

The transfer medium which makes up the communications network is not limited in any particular arrangement or type, and may be any medium that can transfer the program code. Examples of the transfer medium encompass wired line, such as IEEE 1394, USB (Universal Serial Bus), electric power line, cable TV line, telephone line, or ADSL (Asymmetric Digital Subscriber Line) line; or wireless, such as infrared radiation (IrDA, remote control), Bluetooth (registered trademark), 802.11 wireless, HDR, mobile telephone network, satellite line, or terrestrial digital network. The present invention can be realized in a form of a computer data signal embedded in a carrier wave in which the program code is embodied electronically.

The present invention is thus described according to the embodiments. However, the present invention is not limited to the description of the embodiments above, but may be altered by a skilled person within the scope of the claims. An embodiment based on a proper combination of technical means disclosed in different embodiments is encompassed in the technical scope of the present invention.

Industrial Applicability

The filter device according to the present invention is preferably usable as a filter device that serves as a loop filter or post filter provided in an image or video image encoding device and an image or video image decoding device.

Reference Signs List

1      Filter Device
10     Block-size Determination Section (First Determining Means)
11     Difference Calculation Section
12     Pixel-value Calculation Section
13     Adjacent-block-size Determination Section (Second Determining Means)
14     Output Section
100    Image Decoding Device
101    Variable Length Code Decoding Section
102    Inverse Quantization/Inverse Transformation Section
103    Predicted Image Generation Section
104    Frame Memory
105    Block-size Managing Section

**Claims**

1. A filter device for correcting a pixel value of a target pixel to be processed, when encoded image information is decoded, the target pixel being included in a given block and positioned in vicinity to a boundary between the given block and an adjacent block adjacent to the given block, the encoded image information being obtained by dividing image information into a plurality of blocks having different sizes and encoding the plurality of blocks thus divided, said filter device comprising:

   first determining means for determining whether or not the given block has a size equal to or more than a first threshold; and
   pixel-value calculating means for, in a case where the given block has a size equal to or more than the first threshold, calculating a corrected pixel value of the target pixel based on (a) a pixel value of at least one pixel included in the given block and (b) a pixel value of at least one pixel included in the adjacent block.

2. The filter device as set forth in claim 1, wherein:
   in a case where the given block has a size equal to or more than the first threshold, the pixel-value calculating means calculates the corrected pixel value of the target pixel by use of pixels, the number of which is less than the number of pixels to be used in a case where the given block has a size less than the first threshold.

3. The filter device as set forth in claim 1 or 2, further comprising:

   difference calculating means for, in a case where the first determining means determines that the given block has a size equal to or more than the first threshold, calculating an absolute difference between (a) a pixel value of a boundary pixel, which is included in the given block and placed in at least either a row or column where the target pixel is included and which is located next to the adjacent block, and (b) a pixel value of an adjacent pixel which is included in the adjacent block and which is adjacent to the boundary pixel,
   in a case where the absolute difference thus calculated by the difference calculating means is less than a second threshold, the pixel-value calculating means calculating the corrected pixel value of the target pixel based on the pixel value of the target pixel and the pixel value of the adjacent pixel value.

4. The filter device as set forth in claim 3, wherein:

in a case where the target pixel is placed in vicinity to both a first boundary between the given block and an adjacent block adjacent to the given block in a row direction and a second boundary between the given block and another adjacent block adjacent to the given block in a column direction, the pixel-value calculating means uses, as the pixel value of the adjacent pixel, (a) a pixel value of an adjacent pixel adjacent to a boundary pixel of the first boundary, and (b) a pixel value of an adjacent pixel adjacent to a boundary pixel of the second boundary.

**5.** The filter device as set forth in any one of claims 1 to 4, wherein:

a range of pixels to be set as the target pixel is determined depending on what size the given block is.

**6.** The filter device as set forth in any one of claims 1 to 4, wherein:
the target pixel is set by use of (a) absolute differences between pixel values of adjoining pixels in a row direction along pixels included in each row in the given block, or (b) absolute differences between pixel values of adjoining pixels in a column direction along pixels included in each column in the given block.

**7.** The filter device as set forth in any one of claims 1 to 6, further comprising:

second determining means for determining what size the adjacent block adjacent to the given block is,
the pixel-value calculating means changing a filter strength depending on the size of the adjacent block thus determined by the second determining means.

**8.** The filter device as set forth in claim 6, wherein:
where a predetermined absolute value indicates an absolute difference equal to or more than a third threshold, the target pixel is set in either of the following manners: (a) among pixels included in each row in the given block, pixels from the boundary pixel located next to the adjacent block up to a given pixel having a pixel value that takes, in the first place, the predetermined absolute difference with a pixel value of a pixel followed by the given pixel are set as the target pixel, or (b) among pixels included in each column in the given block, pixels from the boundary pixel located next to the adjacent block up to a given pixel having a pixel value that takes, in the first place, the predetermined absolute difference with a pixel followed by the given pixel are set as the target pixel.

**9.** The filter device as set forth in claim 7, wherein:

in a case where the given block has a size less than the first threshold, the second determining means determines whether or not any of adjacent blocks adjacent to the given block has a size equal to or more than the first threshold,
in a case where any of the adjacent blocks has a size equal to or more than the first threshold, the pixel-value calculating means carries out filtering at a filter strength greater than in a case where all the adjacent blocks has a size less than the first threshold.

**10.** The filter device as set forth in claim 3, wherein:
the pixel-value calculating means calculates the corrected pixel value of the target pixel according to the following formula (1):

$$W1 \times p + W2 \times q/(W1 + W2) \quad \dots (1)$$

wherein p represents a pixel value of the target pixel; q represents a pixel value of the adjacent pixel; and W1 and W2 represent given weighting coefficients.

**11.** The filter device as set forth in claim 4, wherein:

the pixel-value calculating means calculates the corrected pixel value of the target pixel according to the following formula (2):

$$WP \times p + WH \times q + WV \times r/(WP + WH + WV) \quad \dots (2)$$

wherein p represents a pixel value of the target pixel; q represents a pixel value of the adjacent pixel adjacent to the boundary pixel of the first boundary; r represents a pixel value of the adjacent pixel adjacent to the boundary pixel of the second boundary; WP, WH, and WV represent given weighting coefficients.

12. A filtering process method for correcting a pixel value of a target pixel to be processed, when encoded image information is decoded, the target pixel being included in a given block and positioned in vicinity to a boundary between the given block and an adjacent block adjacent to the given block, the encoded image information being obtained by dividing image information into a plurality of blocks having different sizes and encoding the plurality of blocks thus divided, said method comprising the steps of:

(a) carrying out a first determination of determining whether or not the given block has a size equal to or more than a first threshold;
(b) carrying out a difference calculation of calculating, in a case where the given block has a size equal to or more than the first threshold, an absolute difference between (i) a pixel value of a boundary pixel, which is included in the given block and placed in at least either a row or column where the target pixel is included and which is located next to the adjacent block, and (ii) a pixel value of an adjacent pixel which is included in the adjacent block and which is adjacent to the boundary pixel; and
(c) calculating, in a case where the absolute difference thus calculated is less than a second threshold, a corrected pixel value of the target pixel based on the pixel value of the target pixel and the pixel value of the adjacent pixel.

13. A decoding device for decoding encoded image information obtained by dividing image information into a plurality of blocks having different sizes and encoding the plurality of blocks thus divided, said decoding device comprising a filter device as set forth in any one of claims 1 to 11.

14. An encoding device for encoding image information by dividing the image information into a plurality of blocks having different sizes and encoding the plurality of blocks thus divided, said encoding device comprising a filter device as set forth in any one of claims 1 to 11.

F I G. 1

FILTERED
PIXEL VALUE

1

OUTPUT SECTION — 14

UNFILTERED
PIXEL VALUE

DIFFERENCE
CALCULATION
SECTION — 11

PIXEL-VALUE
CALCULATION
SECTION — 12

BLOCK SIZE
INFORMATION

BLOCK-SIZE
DETERMINATION
SECTION — 10

ADJACENT-BLOCK-
SIZE DETERMINATION
SECTION — 13

F I G. 2

START

S1
SET TARGET BLOCK

S2
SIZE OF TARGET BLOCK IS EQUAL TO OR MORE THAN THRESHOLD Th1?

NO

YES

A

S3
CALCULATE ABSOLUTE DIFFERENCE

S4
CALCULATE FILTERED PIXEL VALUE OF TARGET PIXEL TO BE FILTERED

S6
SIZE OF ADJACENT BLOCK IS EQUAL TO OR MORE THAN THRESHOLD Th1?

NO

YES

C

B

S7
CALCULATE ABSOLUTE DIFFERENCE

S8
CALCULATE FILTERED PIXEL VALUE OF TARGET PIXEL TO BE FILTERED

S9
CALCULATE ABSOLUTE DIFFERENCE

S10
CALCULATE FILTERED PIXEL VALUE OF TARGET PIXEL TO BE FILTERED

S5
OUTPUT FILTERED PIXEL VALUE

END

F I G. 3

32x32 BLOCK  8x8 BLOCK  16x16 BLOCK

F I G. 4

F I G. 5

Pn　　P3　P2　P1　P0　Q0　Q1　Q2　Q3　　Qn

| pn | ・・・ | p3 | p2 | p1 | p0 | q0 | q1 | q2 | q3 | ・・・ | qn |

BLOCK BOUNDARY

F I G. 6

|  | WEIGHT FOR p7 | WEIGHT FOR p6 | WEIGHT FOR p5 | WEIGHT FOR p4 | WEIGHT FOR p3 | WEIGHT FOR p2 | WEIGHT FOR p1 | WEIGHT FOR p0 | WEIGHT FOR q0 |
|---|---|---|---|---|---|---|---|---|---|
| p0' |  |  |  |  |  |  |  | 4 | 4 |
| p1' |  |  |  |  |  |  | 4 |  | 4 |
| p2' |  |  |  |  |  | 5 |  |  | 3 |
| p3' |  |  |  |  | 5 |  |  |  | 3 |
| p4' |  |  |  | 6 |  |  |  |  | 2 |
| p5' |  |  | 6 |  |  |  |  |  | 2 |
| p6' |  | 6 |  |  |  |  |  |  | 2 |
| p7' | 7 |  |  |  |  |  |  |  | 1 |

F I G.  7

F I G. 8

BLOCK BOUNDARY

BLOCK BOUNDARY

| P00 | p00 | q00 | Q00 |
| P01 | p01 | q01 | Q01 |
| P02 | p02 | q02 | Q02 |
| P03 | p03 | q03 | Q03 |
| P04 | p04 | q04 | Q04 |
| P05 | p05 | q05 | Q05 |
| P06 | p06 | q06 | Q06 |
| P07 | p07 | q07 | Q07 |
| P08 | p08 | q08 | Q08 |
| P09 | p09 | q09 | Q09 |

BLOCK BOUNDARY

F I G. 9

START

SET k = 0 —S20

CALCULATE ABS (p0 — Q0) —S21

ABSOLUTE DIFFERENCE IS EQUAL TO OR MORE THAN Th2? —S22
YES
NO

SET k = k + 1 —S23

CALCULATE ABS (pk — p(k-1)) —S24

ABSOLUTE DIFFERENCE IS LESS THAN THRESHOLD Th4? —S25
YES
NO

k IS LESS THAN PREDETERMINED THRESHOLD Tn? —S27
YES
NO

SET VALUE OF k AS THRESHOLD Th3 —S28

SET VALUE OF k-1 AS THRESHOLD Th3 —S26

END

F I G. 1 0

BLOCK Y

HORIZONTAL BOUNDARY

BLOCK X

BLOCK Z

VERTICAL BOUNDARY

F I G. 1 1

HORIZONTAL
BLOCK BOUNDARY

$Ri0$ — $ri0$

$j$

$Pij$ — $pij$ ← $i$ → $q0j$ — $Q0j$

VERTICAL BLOCK BOUNDARY

33

FIG. 12

FIG. 13

(a)

| | | DISTANCE FROM VERTICAL BOUNDARY | | | | | | | | | | | | | | |
|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| | | 16 | 15 | 14 | 13 | 12 | 11 | 10 | 9 | 8 | 7 | 6 | 5 | 4 | 3 | 2 | 1 |

(b)

| | | DISTANCE FROM HORIZONTAL BOUNDARY | | | | | | | | | | | | | | |
|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| | | 16 | 15 | 14 | 13 | 12 | 11 | 10 | 9 | 8 | 7 | 6 | 5 | 4 | 3 | 2 | 1 |

(c)

| | | DISTANCE FROM VERTICAL BOUNDARY | | | | | | | | | | | | | | | |
|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| DISTANCE FROM HORIZONTAL BOUNDARY | 0 | 16 | 16 | 16 | 16 | 16 | 16 | 16 | 16 | 16 | 16 | 16 | 16 | 16 | 16 | 16 | 16 |
| | 1 | 16 | 17 | 17 | 17 | 17 | 17 | 17 | 17 | 17 | 17 | 17 | 17 | 17 | 17 | 17 | 17 |
| | 2 | 16 | 17 | 18 | 18 | 18 | 18 | 18 | 18 | 18 | 18 | 18 | 18 | 18 | 18 | 18 | 18 |
| | 3 | 16 | 17 | 18 | 19 | 19 | 19 | 19 | 19 | 19 | 19 | 19 | 19 | 19 | 19 | 19 | 19 |
| | 4 | 16 | 17 | 18 | 19 | 20 | 20 | 20 | 20 | 20 | 20 | 20 | 20 | 20 | 20 | 20 | 20 |
| | 5 | 16 | 17 | 18 | 19 | 20 | 21 | 21 | 21 | 21 | 21 | 21 | 21 | 21 | 21 | 21 | 21 |
| | 6 | 16 | 17 | 18 | 19 | 20 | 21 | 22 | 22 | 22 | 22 | 22 | 22 | 22 | 22 | 22 | 22 |
| | 7 | 16 | 17 | 18 | 19 | 20 | 21 | 22 | 23 | 23 | 23 | 23 | 23 | 23 | 23 | 23 | 23 |
| | 8 | 16 | 17 | 18 | 19 | 20 | 21 | 22 | 23 | 24 | 24 | 24 | 24 | 24 | 24 | 24 | 24 |
| | 9 | 16 | 17 | 18 | 19 | 20 | 21 | 22 | 23 | 24 | 25 | 25 | 25 | 25 | 25 | 25 | 25 |
| | 10 | 16 | 17 | 18 | 19 | 20 | 21 | 22 | 23 | 24 | 25 | 26 | 26 | 26 | 26 | 26 | 26 |
| | 11 | 16 | 17 | 18 | 19 | 20 | 21 | 22 | 23 | 24 | 25 | 26 | 27 | 27 | 27 | 27 | 27 |
| | 12 | 16 | 17 | 18 | 19 | 20 | 21 | 22 | 23 | 24 | 25 | 26 | 27 | 28 | 28 | 28 | 28 |
| | 13 | 16 | 17 | 18 | 19 | 20 | 21 | 22 | 23 | 24 | 25 | 26 | 27 | 28 | 29 | 29 | 29 |
| | 14 | 16 | 17 | 18 | 19 | 20 | 21 | 22 | 23 | 24 | 25 | 26 | 27 | 28 | 29 | 30 | 30 |
| | 15 | 16 | 17 | 18 | 19 | 20 | 21 | 22 | 23 | 24 | 25 | 26 | 27 | 28 | 29 | 30 | 31 |

FIG. 14

(a)

| | | DISTANCE FROM VERTICAL BOUNDARY | | | | | | | | | | | | | | | |
|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| DISTANCE FROM HORIZONTAL BOUNDARY | 0 | 336 | 330 | 308 | 299 | 276 | 264 | 240 | 225 | 208 | 182 | 162 | 140 | 112 | 87 | 60 | 31 |
| | 1 | 352 | 330 | 308 | 299 | 276 | 264 | 240 | 225 | 208 | 182 | 162 | 140 | 112 | 87 | 60 | 31 |
| | 2 | 352 | 330 | 308 | 299 | 276 | 264 | 240 | 225 | 208 | 182 | 162 | 140 | 112 | 87 | 60 | 31 |
| | 3 | 368 | 345 | 322 | 299 | 276 | 264 | 240 | 225 | 208 | 182 | 162 | 140 | 112 | 87 | 60 | 31 |
| | 4 | 368 | 345 | 322 | 299 | 276 | 264 | 240 | 225 | 208 | 182 | 162 | 140 | 112 | 87 | 60 | 31 |
| | 5 | 384 | 360 | 336 | 312 | 288 | 264 | 240 | 225 | 208 | 182 | 162 | 140 | 112 | 87 | 60 | 31 |
| | 6 | 384 | 360 | 336 | 312 | 288 | 264 | 240 | 225 | 208 | 182 | 162 | 140 | 112 | 87 | 60 | 31 |
| | 7 | 400 | 375 | 350 | 325 | 300 | 275 | 250 | 225 | 208 | 182 | 162 | 140 | 112 | 87 | 60 | 31 |
| | 8 | 416 | 390 | 364 | 338 | 312 | 286 | 260 | 234 | 208 | 182 | 162 | 140 | 112 | 87 | 60 | 31 |
| | 9 | 416 | 390 | 364 | 338 | 312 | 286 | 260 | 234 | 208 | 182 | 162 | 140 | 112 | 87 | 60 | 31 |
| | 10 | 432 | 405 | 378 | 351 | 324 | 297 | 270 | 243 | 216 | 189 | 162 | 140 | 112 | 87 | 60 | 31 |
| | 11 | 448 | 420 | 392 | 364 | 336 | 308 | 280 | 252 | 224 | 196 | 168 | 140 | 112 | 87 | 60 | 31 |
| | 12 | 448 | 420 | 392 | 364 | 336 | 308 | 280 | 252 | 224 | 196 | 168 | 140 | 112 | 87 | 60 | 31 |
| | 13 | 464 | 435 | 406 | 377 | 348 | 319 | 290 | 261 | 232 | 203 | 174 | 145 | 116 | 87 | 60 | 31 |
| | 14 | 480 | 450 | 420 | 390 | 360 | 330 | 300 | 270 | 240 | 210 | 180 | 150 | 120 | 90 | 60 | 31 |
| | 15 | 496 | 465 | 434 | 403 | 372 | 341 | 310 | 279 | 248 | 217 | 186 | 155 | 124 | 93 | 62 | 31 |

(b)

| | | DISTANCE FROM VERTICAL BOUNDARY | | | | | | | | | | | | | | | |
|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| DISTANCE FROM HORIZONTAL BOUNDARY | 0 | 352 | 342 | 364 | 357 | 380 | 376 | 400 | 399 | 400 | 426 | 430 | 436 | 464 | 473 | 484 | 497 |
| | 1 | 342 | 364 | 386 | 380 | 403 | 400 | 424 | 424 | 426 | 452 | 457 | 464 | 492 | 502 | 514 | 528 |
| | 2 | 364 | 386 | 408 | 403 | 426 | 424 | 448 | 449 | 452 | 478 | 484 | 492 | 520 | 531 | 544 | 559 |
| | 3 | 357 | 380 | 403 | 426 | 449 | 448 | 472 | 474 | 478 | 504 | 511 | 520 | 548 | 560 | 574 | 590 |
| | 4 | 380 | 403 | 426 | 449 | 472 | 472 | 496 | 499 | 504 | 530 | 538 | 548 | 576 | 589 | 604 | 621 |
| | 5 | 376 | 400 | 424 | 448 | 472 | 496 | 520 | 524 | 530 | 556 | 565 | 576 | 604 | 618 | 634 | 652 |
| | 6 | 400 | 424 | 448 | 472 | 496 | 520 | 544 | 549 | 556 | 582 | 592 | 604 | 632 | 647 | 664 | 683 |
| | 7 | 399 | 424 | 449 | 474 | 499 | 524 | 549 | 574 | 582 | 608 | 619 | 632 | 660 | 676 | 694 | 714 |
| | 8 | 400 | 426 | 452 | 478 | 504 | 530 | 556 | 582 | 608 | 634 | 646 | 660 | 688 | 705 | 724 | 745 |
| | 9 | 426 | 452 | 478 | 504 | 530 | 556 | 582 | 608 | 634 | 660 | 673 | 688 | 716 | 734 | 754 | 776 |
| | 10 | 430 | 457 | 484 | 511 | 538 | 565 | 592 | 619 | 646 | 673 | 700 | 716 | 744 | 763 | 784 | 807 |
| | 11 | 436 | 464 | 492 | 520 | 548 | 576 | 604 | 632 | 660 | 688 | 716 | 744 | 772 | 792 | 814 | 838 |
| | 12 | 464 | 492 | 520 | 548 | 576 | 604 | 632 | 660 | 688 | 716 | 744 | 772 | 800 | 821 | 844 | 869 |
| | 13 | 473 | 502 | 531 | 560 | 589 | 618 | 647 | 676 | 705 | 734 | 763 | 792 | 821 | 850 | 874 | 900 |
| | 14 | 484 | 514 | 544 | 574 | 604 | 634 | 664 | 694 | 724 | 754 | 784 | 814 | 844 | 874 | 904 | 931 |
| | 15 | 497 | 528 | 559 | 590 | 621 | 652 | 683 | 714 | 745 | 776 | 807 | 838 | 869 | 900 | 931 | 962 |

FIG. 15

F I G. 1 6

BLOCK BOUNDARY

F I G. 1 7

(a)

|  | WEIGHT FOR p3 | WEIGHT FOR p2 | WEIGHT FOR p1 | WEIGHT FOR p0 | WEIGHT FOR q0 | WEIGHT FOR q1 | WEIGHT FOR q2 | WEIGHT FOR q3 |
|---|---|---|---|---|---|---|---|---|
| p0' |  | 1 | 2 | 2 | 2 | 1 |  |  |
| p1' |  | 2 | 2 | 2 | 2 |  |  |  |
| p2' | 2 | 3 | 1 | 1 | 1 |  |  |  |

(b)

|  | WEIGHT FOR q3 | WEIGHT FOR q2 | WEIGHT FOR q1 | WEIGHT FOR q0 | WEIGHT FOR p0 | WEIGHT FOR p1 | WEIGHT FOR p2 | WEIGHT FOR p3 |
|---|---|---|---|---|---|---|---|---|
| q0' |  |  | 2 | 2 | 4 |  |  |  |
| q1' |  | 2 | 2 | 2 | 2 |  |  |  |
| q2' | 2 | 2 | 2 | 1 | 1 |  |  |  |

FIG. 18

BLOCK BOUNDARY

| INTERNATIONAL SEARCH REPORT | International application No. |
|---|---|
| | PCT/JP2009/062003 |

**A. CLASSIFICATION OF SUBJECT MATTER**
H04N7/26(2006.01)i

According to International Patent Classification (IPC) or to both national classification and IPC

**B. FIELDS SEARCHED**

Minimum documentation searched (classification system followed by classification symbols)
H04N7/24-7/68

Documentation searched other than minimum documentation to the extent that such documents are included in the fields searched
Jitsuyo Shinan Koho       1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-521065 A  (Qualcomm Inc.),<br>14 September, 2006 (14.09.06),<br>Par. Nos. [0022] to [0023], [0036]<br>& WO 2004/084123 A1     & US 2004/0208392 A1 | 1,3-5,7,9-14<br>2,6,8 |
| A | WO 2002/067589 A1  (Seiko Epson Corp.),<br>29 August, 2002 (29.08.02),<br>Full text; all drawings<br>& US 2003/0138160 A1 | 1-14 |
| A | JP 2003-324740 A  (Matsushita Electric<br>Industrial Co., Ltd.),<br>14 November, 2003 (14.11.03),<br>Full text; all drawings<br>(Family: none) | 1-14 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 18 September, 2009 (18.09.09) | 06 October, 2009 (06.10.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/062003

C (Continuation). DOCUMENTS CONSIDERED TO BE RELEVANT

| Category* | Citation of document, with indication, where appropriate, of the relevant passages | Relevant to claim No. |
|---|---|---|
| A | JP 2004-180248 A (Matsushita Electric Industrial Co., Ltd.), 24 June, 2004 (24.06.04), Full text; all drawings & WO 2003/047262 A2 & US 2004/0062310 A1 | 1-14 |
| A | JP 2001-245179 A (Sanyo Electric Co., Ltd.), 07 September, 2001 (07.09.01), Full text; all drawings (Family: none) | 1-14 |
| A | JP 11-205792 A (Sony Corp.), 30 July, 1999 (30.07.99), Full text; all drawings (Family: none) | 1-14 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005039766 A

**Non-patent literature cited in the description**

- ISO/IEC14496-10. *ITU-T,* May 2003, 144-153

- **Shinich SAKAIDA et al.** Coding of Super-High Definition Video Via Expansion of AVC/H.264 Transform Block Size. *The Institute of Electronics, Information and Communication Engineers, General Conference D-11-41,* 2006